# EUROPEAN PATENT APPLICATION

(11) **EP 4 468 450 A1**
(43) Date of publication of application: **27.11.2024**
(21) Application number: 23743192.9
(22) Date of filing: 13.01.2023
(51) Int. Cl.: H01M 10/54, B09B 3/40, B09B 3/70, B09B 5/00, C01D 15/08, C22B 1/02, C22B 3/08, C22B 3/22, C22B 3/24, C22B 3/44, C22B 7/00

(54) **METHOD FOR RECOVERING VALUABLE SUBSTANCE**

(30) Priority: 20.01.2022 JP 2022007276; 21.12.2022 JP 2022204158
(71) Applicant: Dowa Eco-System Co., Ltd., Tokyo 101-0021 (JP)
(72) Inventor: NISHIKAWA, Chihiro, Tokyo 101-0021 (JP); TAHATA, Shota, Tokyo 101-0021 (JP); WATANABE, Ryoei, Tokyo 101-0021 (JP); LIU, Changzhi, Tokyo 101-0021 (JP); YOSHIDA, Shohei, Tokyo 101-0021 (JP)
(74) Representative: Müller-Boré & Partner Patentanwälte PartG mbB
(86) International application number: PCT/JP2023/000880
(87) International publication number: WO 2023/140198

(57) **Abstract**

Provided is a method of recovering valuable materials that is a method of recovering lithium carbonate from a lithium-ion secondary battery, where the lithium carbonate has a boron content of less than 1 ppm and a calcium content of 100 ppm or less. The method includes a heat treatment step of performing a heat treatment on the lithium-ion secondary battery at a temperature of 660°C or higher to obtain a heat-treated product, a crushing and classification step of crushing the heat-treated product to obtain a crushed product and classifying the crushed product into a coarse-particle product and a fine-particle product, both including the valuable materials, a slurry formation step of immersing the fine-particle product in water to form fine-particle product slurry, a wet magnetic separation step of performing wet magnetic separation on the fine-particle product slurry to separate the fine-particle product slurry into a magnetic material and a non-magnetic material slurry, an acid leaching step of adding sulfuric acid to the non-magnetic material slurry, or a non-magnetic material obtained by performing solid-liquid separation on the non-magnetic material slurry, or both the non-magnetic material slurry and the non-magnetic material to adjust pH to 0 or greater and 3.5 or less to leach the non-magnetic material, followed by performing solid-liquid separation to obtain an acid leachate and an acid leach residue, a neutralization step of neutralizing the acid leachate with calcium hydroxide, a neutralized cake solid-liquid separation step of performing solid-liquid separation on a liquid obtained at the neutralization step, a calcium carbonate crystallization step of adding CO₂ to a liquid obtained at the neutralized cake solid-liquid separation step, a calcium carbonate solid-liquid separation step of performing solid-liquid separation on a liquid obtained at the calcium carbonate crystallization step, and a calcium adsorption and removal step of adsorbing and removing calcium with a chelating resin after the calcium carbonate solid-liquid separation step.

## Description

### Technical Field

The present invention relates to a method of recovering valuable materials from lithium secondary batteries.

### Background Art

Lithium-ion secondary batteries are secondary batteries that are lighter in weight, and have both higher capacity and higher electromotive force than lead-acid batteries, nickelcadmium (Ni-Cd) secondary batteries, etc., existing in the related art. Lithium-ion secondary batteries are used for personal computers, electric cars, mobile devices, and the like. For example, valuable materials, such as cobalt, nickel, and the like, are used as lithium cobalt oxide (LiCoO₂), an NMC positive electrode material (LiNiₓCo_{y}Mn_{z}O₂ (x + y + z = 1)), and the like in a positive electrode of each lithium-ion secondary battery.

It is expected that use of lithium-ion secondary batteries will keep increasing in the future. Therefore, recovery of valuable materials, such as lithium and the like, from lithium-ion batteries discarded due to generation of defective products during production processes, the end of service life of devices using the lithium-ion secondary batteries, or the like is desired in view of recycling of resources. When valuable materials, such as lithium and the like, are recovered from lithium-ion secondary batteries, it is important that the valuable materials are recovered by separating the various materials from various metals or impurities used in lithium-ion secondary batteries from a standpoint of increase in a value of a recovered product.

As a method of recovering lithium from a crushed product of a roasted lithium-ion secondary battery, for example, a lithium recovery method that is a method of recovering lithium from battery scraps obtained by roasting discarded lithium-ion secondary batteries is proposed. The lithium recovery method includes a leaching step of leaching the battery scraps including lithium aluminate with an acid solution, and a neutralization step of increasing pH of a liquid after the leaching, which is obtained at the leaching step, to neutralize the liquid and performing solid-liquid separation of the neutralized liquid to obtain a lithium solution (for example, see Patent Literature 1).

Moreover, the present inventors have already proposed a method of recovering valuable materials that is a method of recovering valuable materials from a lithium-ion secondary battery. The method includes: a heat treatment step of heat-treating a lithium-ion secondary battery at a temperature of 750°C or higher to obtain a heat-treated product; a crushing and classification step of crushing the heat-treated product to obtain a crushed product and classifying the crushed product into a coarse-particle product and fine-particle product including the variable materials; a water leaching step of immersing the fine-particle product in water to obtain water leach slurry; a wet magnetic separation step of performing wet magnetic separation on the water leach slurry to separate the water leach slurry into a magnetic material and non-magnetic material slurry; and an acid leaching step of adding an acid solution to the non-magnetic material slurry recovered by the wet magnetic separation and/or a non-magnetic material obtained by performing solid-liquid separation on the non-magnetic material slurry to adjust pH to 0 or higher and 3.5 or lower to leach the non-magnetic material, followed by performing solid-liquid separation to obtain an acid leachate and an acid leach residue (for example, see Patent Literature 2).

### Citation List

### Patent Literature

Patent Literature 1: Japanese Unexamined Patent Application Publication No. 2019-160429
Patent Literature 2: Japanese Patent No. 6948481

### Summary of Invention

### Technical Problem

In the related art of Patent Literature 1, however, sometimes there is a case where a boron content of recovered lithium carbonate is 1 ppm or greater. The present inventors have found the following. Battery scraps obtained by roasting lithium-ion secondary batteries include boron derived from electrolytes, and when the battery scraps are subjected to acid leaching, almost an entire amount of boron is transferred into an acid solution. The boron included in lithium carbonate recovered from the acid solution is present as a boric acid salt. The above boron included in the lithium carbonate may adversely affect charging and discharging performance of a lithium-ion secondary battery using the recovered lithium carbonate.

Moreover, the present inventors have found the followings. When sodium hydroxide is used at a neutralization step as in Patent Literature 1, a large amount of sodium is dissolved in a lithium solution, and lithium carbonate recovered from the lithium solution may include sodium in an amount of 0.5% by mass or greater. Thus, the lithium carbonate of a grade suitable for use in lithium-ion secondary batteries may not be recovered. Further, the present inventors have found as follows. When sulfuric acid is used as an acid solution at an acid leaching step, sulfuric acid ions are included in a lithium solution, and lithium carbonate recovered from the lithium solution may include SO₄ in an amount of 0.5% by mass or greater. Thus, the lithium carbonate of a grade usable for use in lithium-ion secondary batteries may not be recovered. Moreover, cobalt, nickel, or the like is leached and precipitated as hydroxide at the neutralization step in Patent Literature 1. The present inventors have found that, as an amount of the above residue becomes large, a large amount of lithium may be lost into the residue.

Patent Literature 2 describes that calcium can be adsorbed on and removed by an ion-exchange resin. However, the present inventors have found that, when calcium is adsorbed on and removed by an ion-exchange resin, lithium may be also adsorbed on the ion-exchange resin, and moreover adsorption and removal of calcium is not sufficiently carried out with the ion-exchange resin.

Moreover, in Patent Literature 2, slaked lime is used as an alkali at a neutralization step. However, the present inventors have found that, since pH of the liquid obtained at the neutralization step is at the alkaline side, the liquid absorbs CO₂ from the air to precipitate calcium ions as calcium carbonate in the liquid, and as the precipitated calcium carbonate is passed through the ion-exchange resin, blockage of the resin column may be caused, which reduces an amount of calcium adsorbed and removed.

The present invention aims to solve various problems existing in the related art and to achieve the following object. Specifically, an object of the present invention is to provide a method of recovering valuable materials, this method being a method by which high-grade lithium carbonate having a boron content of less than 1 ppm and a calcium content of 100 ppm or less from lithium-ion secondary batteries at a high recovery rate can be recovered.

### Solution to Problem

Means for solving the above-described problems are as follows.
<1> A method of recovering valuable materials, the method including:
   a heat treatment step of performing a heat treatment on a lithium-ion secondary battery at a temperature of 660°C or higher to obtain a heat-treated product;
   a crushing and classification step of classifying a crushed product obtained by crushing the heat-treated product into a coarse-particle product and a fine-particle product, both including the valuable materials;
   a slurry formation step of immersing the fine-particle product in water to form fine-particle product slurry;
   a wet magnetic separation step of performing wet magnetic separation on the fine-particle product slurry to separate the fine-particle product slurry into a magnetic material and a non-magnetic material slurry;
   an acid leaching step of adding sulfuric acid to the non-magnetic material slurry, or a non-magnetic material obtained by performing solid-liquid separation on the non-magnetic material slurry, or both the non-magnetic material slurry and the non-magnetic material to adjust pH to 0 or greater and 3.5 or less to leach the non-magnetic material, followed by performing solid-liquid separation to obtain an acid leachate and an acid leach residue;
   a neutralization step of neutralizing the acid leachate with calcium hydroxide;
   a neutralized cake solid-liquid separation step of performing solid-liquid separation on a liquid obtained at the neutralization step;
   a calcium carbonate crystallization step of adding CO₂ to a liquid obtained at the neutralized cake solid-liquid separation step;
   a calcium carbonate solid-liquid separation step of performing solid-liquid separation on a liquid obtained at the calcium carbonate crystallization step; and
   a calcium adsorption and removal step of adsorbing and removing calcium with a chelating resin after the calcium carbonate solid-liquid separation step,
   wherein the method of recovering valuable materials is a method of recovering lithium carbonate from the lithium-ion secondary battery, where the lithium carbonate has a boron content of less than 1 ppm and a calcium content of 100 ppm or less.
<2> The method of recovering valuable materials according to <1>,
   wherein an amount of the CO₂ added at the calcium carbonate crystallization step is 0.1 or greater in a molar ratio to calcium ions of the liquid obtained at the neutralized cake solid-liquid separation step, and is 0.5 or less in a molar ratio to lithium ions of the liquid obtained at the neutralized cake solid-liquid separation step.
<3> The method of recovering valuable materials according to <1> or <2>,
   wherein the chelating resin is an iminodiacetic acid group-containing chelating resin.
<4> The method of recovering valuable materials according to <1>, further including:
   a first concentration step of concentrating, by electrolysis, lithium included in the liquid obtained at calcium carbonate crystallization step, after the calcium carbonate crystallization step.
<5> The method of recovering valuable materials according to <1>, further including:
   a second concentration step of performing electrodialysis to concentrate lithium included in a liquid from which calcium is removed through adsorption, after the calcium adsorption and removal step.
<6> The method of recovering valuable materials according to <4> or <5>, further including:
   a lithium carbonate crystallization step of adding carbonic acid to a concentrate obtained at the first concentration step or the second concentration step to crystallize lithium carbonate.
<7> The method of recovering valuable materials according to <6>,
   wherein the lithium carbonate is washed with warm water to obtain lithium carbonate having both a sulfuric acid content and a sodium content of 0.5% by mass or less.
<8> The method of recovering valuable materials according to <1> or <2>,
   wherein the lithium carbonate has a potassium content of 50 ppm or less.

### Effects of Invention

According to the present invention, various problems existing in the related art can be solved, and a method of recovering valuable materials, which can recover high-grade lithium carbonate having a boron content of less than 1 ppm and a calcium content of 100 ppm or less from lithium-ion secondary batteries at a high recovery rate, can be provided.

### Brief Description of Drawing

[Fig. 1] Fig. 1 is a chart depicting an example of a process flow of the method of recovering valuable materials according to a first embodiment.
[Fig. 2] Fig. 2 is a chart depicting an example of a process flow of the method of recovering valuable materials according to a second embodiment.

### Description of Embodiments

### (Method of recovering valuable materials)

The method of recovering valuable materials of the present invention includes a heat treatment step, a crushing and classification step, a slurry formation step, a wet magnetic separation step, an acid leaching step, a neutralization step, a neutralized cake solid-liquid separation step, a calcium carbonate crystallization step, a calcium carbonate solid-liquid separation step, and a calcium adsorption and removal step, and preferably further includes a first concentration step and a second concentration step. The method of recovering valuable materials may further include other steps as necessary.

According to the method of recovering valuable materials of the present invention, high-grade lithium carbonate having a boron content of less than 1 ppm and a calcium content of 100 ppm or less can be recovered from lithium-ion secondary batteries at high recovery rate. According to the method of recovering valuable materials, moreover, high-grade lithium carbonate can be efficiently recovered with a small number of process stages within a short period.

The method of recovering valuable materials of the present invention is a method of recovering valuable materials from lithium-ion secondary batteries.

In the present specification, the "valuable materials" encompass materials that can be traded without there being any discarding. Examples of the valuable materials include various metals. Examples of the valuable materials in lithium-ion secondary batteries include a carbon (C) concentrate having a high carbon content, copper (Cu), aluminum (Al), lithium (Li), cobalt (Co), nickel (Ni), and the like. Among the above-listed example, the valuable materials may be high-grade lithium carbonate having a boron content of less than 1 ppm and a calcium content of less than 10 ppm.

### -Lithium-ion secondary battery-

The lithium-ion secondary battery is not particularly limited, and may be appropriately selected according to the intended purpose. Examples of the lithium-ion secondary battery include defective lithium-ion secondary batteries generated during production processes of lithium-ion secondary batteries, lithium-ion secondary batteries used in devices discarded because of failures of the devices or after the end of service life of the devices, used lithium-ion secondary batteries discarded after the end of service life of the lithium-ion secondary batteries, and the like.

A shape, structure, size, and material of the lithium-ion secondary battery are not particularly limited, and may be appropriately selected according to the intended purpose.

The shape of the lithium-ion secondary battery is not particularly limited, and may be appropriately selected according to the intended purpose. Examples of the shape of the lithium-ion secondary battery include laminate shapes, cylindrical shapes, button shapes, coin shapes, square shapes, flat shapes, and the like.

Moreover, a configuration of the lithium-ion secondary battery is not particularly limited, and may be appropriately selected according to the intended purpose. Examples of the configuration of the lithium-ion secondary battery include battery cells, battery modules, battery packs, and the like. In the present specification, a battery module encompasses a plurality of battery cells connected and collectively assembled in one housing, and a battery pack encompasses a plurality of battery modules collectively assembled in one housing. Moreover, a battery pack may be equipped with a regulation controller or a cooling device.

Examples of the lithium-ion secondary battery include lithium-ion secondary batteries each including a positive electrode, a negative electrode, a separator, an electrolytic solution including an electrolyte and an organic solvent, and an outer container that is a battery case housing the positive electrode, the negative electrode, the separator, and the electrolytic solution, and the like. Note that, lithium-ion secondary batteries may be in a state where a positive electrode, a negative electrode, and the like have become detached from the batteries.

### --Positive electrode--

The positive electrode is not particularly limited as long as the positive electrode includes a positive electrode active material. The positive electrode may be appropriately selected according to the intended purpose.

A shape of the positive electrode is not particularly limited, and may be appropriately selected according to the intended purpose. Examples of the shape of the positive electrode include plate shapes, sheet shapes, and the like.

### ---Positive electrode collector---

A shape, structure, size, material, and the like of the positive electrode collector are not particularly limited, and may be appropriately selected according to the intended purpose.

Examples of the shape of the positive electrode collector include foil shapes and the like.

Examples of the material of the positive electrode collector include stainless steel, nickel, aluminum, copper, titanium, tantalum, and the like. Among the above-listed examples, aluminum is preferred.

The positive electrode material is not particularly limited, and may be appropriately selected according to the intended purpose. Examples of the positive electrode material include a positive electrode material that includes at least a lithium-containing positive electrode active material and may optionally further include a conductive agent and a binder resin, and the like.

Examples of the positive electrode active material include lithium manganese oxide (LiMn₂O₄) referred to as LMO, lithium cobalt oxide (LiCoO₂) referred to as LCO, LiNiₓCo_{y}Mn_{z}O₂ (x + y + z = 1) referred to as ternary materials or NCM, LiNiₓCo_{y}Al_{z} (x + y + z = 1) referred to as NCA, lithium iron phosphate (LiFePO₄), lithium cobalt nickel oxide (LiCo_{1/2}Ni_{1/2}O₂), lithium titanium oxide (Li₂TiO₃), and the like. Moreover, as the positive electrode active material, the above materials may be used in combination.

The conductive agent is not particularly limited, and may be appropriately selected according to the intended purpose. Examples of the conductive agent include carbon black, graphite, carbon fibers, metal carbide, and the like.

The binder resin is not particularly limited, and may be appropriately selected according to the intended purpose. Examples of the binder resin include homopolymers or copolymers of vinylidene fluoride, ethylene tetrafluoride, acrylonitrile, ethylene oxide, etc., styrene-butadiene rubber, and the like.

### --Negative electrode--

The negative electrode is not particularly limited as long as the negative electrode includes a carbon (C)-containing negative electrode active material. The negative electrode may be appropriately selected according to the intended purpose.

A shape of the negative electrode is not particularly limited, and may be appropriately selected according to the intended purpose. Examples of the shape of the negative electrode include plate shapes, sheet shapes, and the like.

### ---Negative electrode collector---

A shape, structure, size, material, and the like of the negative electrode collector are not particularly limited, and may be appropriately selected according to the intended purpose.

Examples of the shape of the negative electrode collector include foil shapes.

Examples of the material of the negative electrode collector include stainless steel, nickel, aluminum, copper, titanium, tantalum, and the like. Among the above-listed examples, copper is preferred.

The negative electrode active material is not particularly limited as long as the negative electrode active material is a carbon (C)-containing negative electrode active material. The negative electrode active material may be appropriately selected according to the intended purpose. Examples of the negative electrode active material include carbon materials, such as graphite, hard carbon, and the like. As the negative electrode active material, moreover, a combination of carbon and a non-carbon material, such as titanate, silicon, and the like, may be used.

Moreover, a material of the outer container (housing) of the lithium-ion secondary battery is not particularly limited, and may be appropriately selected according to the intended purpose. Examples of the material of the outer container include aluminum, iron, stainless steel, resins (plastics), and the like.

Each step of the method of recovering valuable materials of the present invention will be described in detail hereinafter.

### <Heat treatment step>

The heat treatment step is a step of performing a heat treatment on a lithium-ion secondary battery to obtain a heat-treated product. The heat-treated product (roasted product) encompasses a product obtained by performing a heat treatment on a lithium-ion secondary battery.

A method of performing the heat treatment at the heat treatment step is not particularly limited, and may be appropriately selected according to the intended purpose. For example, the heat treatment can be performed by heating a target in a roasting furnace available in the related art.

The roasting furnace is not particularly limited, and may be appropriately selected according to the intended purpose. Examples of the roasting furnace include rotary kilns, fluidized bed furnaces, tunnel kilns, batch-type furnaces (e.g., Muffle furnaces), cupola furnaces, stoker furnaces, and the like.

The atmosphere used for the heat treatment is not particularly limited, and may be appropriately selected according to the intended purpose. Examples of the atmosphere include ambient atmosphere, inert atmosphere, reducing atmosphere, low oxygen atmosphere, and the like.

The ambient atmosphere (air atmosphere) encompasses the atmosphere using the atmospheric gas (air) including approximately 21% by volume of oxygen and approximately 78% by volume of nitrogen.

Examples of the inert atmosphere include atmosphere composed of nitrogen or argon.

The reducing atmosphere encompasses, for example, atmosphere where CO, H₂, H₂S, SO₂, and the like are included in inert atmosphere of nitrogen, argon, or the like.

The low oxygen atmosphere encompasses atmosphere including 11% or less of oxygen.

### <<Conditions of heat treatment>>

Conditions (heat treatment conditions) for performing a heat treatment (heating) of a target are not particularly limited as long as the conditions are conditions in which each of constituent components of the target is separated to be crushable in the below-described crushing and classification step. The conditions may be appropriately selected according to the intended purpose.

Examples of the heat treatment conditions include a temperature of the heat treatment, duration of the heat treatment, and the like.

The temperature of the heat treatment is a temperature of the lithium-ion secondary battery serving as the target during the heat treatment. The temperature of the heat treatment can be measured by inserting a thermometer, such as a thermocouple, a thermistor, or the like, into the target during the heat treatment.

The temperature during the heat treatment (the temperature of the heat treatment) is 660°C or higher, preferably 700°C or higher and 1,080°C or lower, and more preferably 750°C or higher and 900°C or lower. By setting the temperature of the heat treatment at 660°C or higher, an aluminum (Al) member used for an outer container or the like is roasted so that the aluminum (Al) member is separated from other constituent components of lithium-ion secondary battery. At the same time, an Al foil used for a positive electrode collector is made brittle so that the Al foil is recovered within a fine-particle product in subsequent steps, such as a crushing step and a classification step. Therefore the Al in the fine-particle product can be used to remove boron in the neutralization step. By setting the temperature of the heat treatment at 660°C or higher, reduction of cobalt oxide and nickel oxide included in the positive electrode active material occurs. Moreover, the above metals can be grown to a particle size with which the metals can be easily magnetically attracted during magnetic separation that is a subsequent step. Such increase in the particle size is more likely to occur when the heat treatment is performed at a high temperature. Moreover, as a Li component in the positive electrode active material is decomposed into LiF or Li₂O, a loss of the lithium into the magnetic material (the non-decomposed positive electrode active material may be attached to cobalt oxide and recovered together with the cobalt oxide) can be minimized.

Moreover, a material having a melting point higher than the temperature of the heating treatment is preferably used for an outer container of the lithium-ion secondary battery.

In the case where a material having a melting point lower than the temperature of the heat treatment is used for an outer container of the lithium-ion secondary battery, the heat treatment is preferably carried out in a low oxygen atmosphere having an oxygen concentration of 11 vol% or lower, or in such manner that an oxygen concentration at least inside the lithium-ion secondary battery during roasting (particularly, around the positive electrode collector and the negative electrode collector disposed inside the outer container of the lithium-ion secondary battery) is to be 11 vol% or less.

As a method for achieving the low oxygen atmosphere, for example, a lithium-ion secondary battery, a positive electrode, or a negative electrode may be placed in an oxygen-shielding container, and the oxygen-shielding container is then subjected to the heat treatment. A material of the oxygen-shielding container is not particularly limited as long as the material is a material having a melting point equal to or higher than the temperature of the heat treatment. The material of the oxygen-shielding container may be appropriately selected according to the intended purpose. In the case where the temperature of the heat treatment is 800°C, examples of the material of the oxygen-shielding container include iron, stainless steel, and the like, each having a melting point higher than the above temperature of the heat treatment.

In order to release the gas pressure generated by combustion of an electrolytic solution in the lithium-ion secondary battery or a laminate, an opening is preferably formed in the oxygen-shielding container. An area of the opening is preferably set at 12.5% or less relative to a surface area of an outer container in which the opening is formed. The area of the opening is more preferably 6.3% or less relative to the surface area of the outer container in which the opening is formed. A shape, size, location, and the like of the opening are not particularly limited, and may be appropriately selected according to the intended purpose.

As the heat treatment is performed in the state where the lithium-ion secondary battery is placed in the oxygen-shielding container, carbon of the negative electrode active material can remain without being combusted so that a recovery rate of the carbon can be improved.

Duration for performing the heat treatment on the lithium-ion secondary battery (duration of the heat treatment) is not particularly limited, and may be appropriately selected according to the intended purpose. The duration of the heat treatment is preferably 1 minute or longer and 5 hours or shorter, and more preferably 1 minute or longer and 2 hours or shorter. The duration of the heat treatment may be the time required for a lithium-containing compound to reach a desired temperature, but the moderate heating speed can facilitate decomposition of the positive electrode active material, thereby minimizing the loss of lithium due to inclusion of lithium in the magnetic material. In addition, an amount of acid used for the below-described acid leaching of the non-magnetic material can be reduced. Moreover, the period for retaining the temperature after heating may be shortened. If the duration of the heat treatment exceeds 5 hours, loss of carbon is caused by combustion thereof so that metals, such as copper and the like, recovered within the coarse-particle product in the classification step are oxidized, which reducing quality as valuable materials, and moreover costs of fuels and electricity used for the heat treatment increase. Therefore, the duration of the heat treatment is preferably 5 hours or shorter.

The above preferred duration of the heat treatment is advantageous in view of the cost of the heat treatment and productivity.

In the method of recovering valuable materials of the present invention, moreover, aluminum derived from an outer container can be melted and separated by setting the temperature of the heat treatment at 660°C or higher.

In the method of recovering valuable materials of the present invention, moreover, a positive electrode active material is sufficiently decomposed into lithium carbonate and lithium oxide, which are easily dissolved in water, at the heat treatment step so that a leaching rate in water becomes high. On the other hand, aluminum included in an outer container, a positive electrode collector, and the like is reacted to generate lithium aluminate (LiAlO₂), which is sparingly soluble in water. Even in this case, the lithium aluminate can be dissolved at the acid leaching step, thus lithium (Li) can be recovered at a high recovery rate.

### <Crushing and classification step (crushing process)>

The crushing and classification step (crushing process) includes a process of crushing the heat-treated product (a product obtained by performing the heat treatment on the lithium-ion secondary battery) to obtain a crushed product.

The crushing process is not particularly as long as the crushing process enables the heat-treated product (roasted product) to be crushed to obtain a crushed product. The crushing process may be appropriately selected according to the intended purpose. Moreover, the crushed product encompasses a product obtained by crushing the heat-treated product.

As the crushing process, for example, it is preferred that the heat-treated product is crushed by a high-impact force to obtain a crushed product. In the case where an outer container of the lithium-ion secondary battery is not melted during the heat treatment, the heat-treated product is preferably cut by a cutting device to pre-crush the heat-treated product subjecting the heat-treated product to a high-impact force.

The crushing process may be performed in a wet system. In the case where the crushing process is performed in the wet system, loss of the positive electrode and negative electrode active material, such as carbon, nickel, and the like, through scattering can be inhibited during the crushing, and use of a dust collector for avoiding the loss can be omitted. Moreover, all the water-soluble lithium components in the heat-treated product can be recovered in the water in the crushing process.

Examples of the method of crushing by a high-impact force include: a method where the heat-treated product is thrown at a collision plate by a rotating striking plate to beat the heat-treated product with the collision plate subject the heat-treated product to a high-impact force; a method of beating the heat-treated product with a rotating hitting element (beater); and the like. For example, the method may be carried out by a hammer crusher or the like. Moreover, the method of crushing the heat-treated product by a high-impact force may be, for example, a method of beating the heat-treated product with balls such as ceramics, which may be carried out by a ball mill or the like. Moreover, crushing of the heat-treated product a high-impact force can be also performed, for example, by a two-shaft shredder that performs crushing with compression using short and narrow blades, or the like.

Furthermore, examples of the method of crushing the heat-treated product by a high-impact force include a method of beating the heat-treated product with two rotating chains to subject the heat-treated product to a high-impact force, and the like. For example, the method is performed by a chain mill or the like.

As the heat-treated product is crushed by a high-impact force, crushing of a positive electrode collector (e.g., aluminum (Al)) is facilitated, but a negative electrode collector (e.g., copper (Cu) whose form has not been significantly changed stays the same form, such as a foil. Therefore, the negative electrode collector is merely cut at the crushing and classification step. Accordingly, a crushed product in a state where valuable materials derived from the positive electrode collector (e.g., aluminum) and valuable materials derived from the negative electrode collector (e.g., copper (Cu)) are efficiently separated at the below-described crushing and classification step, can be obtained.

Crushing duration in the crushing process is not particularly limited, and may be appropriately selected according to the intended purpose. Crushing duration per kilogram of the lithium-ion secondary batteries is preferably 1 second or longer and 30 minutes or shorter, more preferably 2 seconds or longer and 10 minutes or shorter, and particularly preferably 3 seconds or longer and 5 minutes or shorter.

### <Crushing and classification step (classification process)>

The crushing and classification step (classification process) includes a process of classifying the crushed product to obtain a coarse-particle product and a fine-particle product, both including valuable materials.

The classification process is not particularly as long as the coarse-particle product (oversize product) and the fine-particle product(undersize product) can be obtained by classifying the crushed product. The classification process may be appropriately selected according to the intended purpose.

A method of the classification is not particularly limited, and may be appropriately selected according to the intended purpose. For example, the classification can be performed by a vibration sieve, a multi-stage vibration sieve, a cyclone, the standard sieve of JIS Z8801 or the like. As a result of the classification, copper (Cu), iron (Fe), and the like are separated and recovered in a coarse-particle product, and lithium, cobalt, nickel, or carbon can be concentrated in a fine-particle product.

The classification process may be performed in a wet system. In this case, loss of a positive electrode and negative electrode active material, such as carbon, cobalt, nickel, and the like, due to scattering can be prevented during crushing, and a dust collector used for minimizing the loss can be omitted. In order to minimize the scattering, the crushed product may be humidified before the classification. As a method of the humidification, a mist of water may be sprayed. As a result, scattering of carbon, cobalt, and nickel can be prevented when water is sprinkled on the crushed product.

A particle size of the classification (classification cut point or opening size of the sieve) is not particularly limited, and may be appropriately selected according to the intended purpose. In the case where an aim of the classification is to separate and recover copper (Cu), iron (Fe), aluminum (Al), and the like in the coarse-particle product and to concentrate carbon (C), lithium (Li), cobalt (Co), nickel (Ni), manganese (Mn), and the like in the fine-particle product, the particle size of the classification is preferably 0.15 mm or greater and 2.4 mm or less, and more preferably 0.3 mm or greater and 1.7 mm or less. When the particle size of the classification is 2.4 mm or less, contamination of the fine-particle product with copper (Cu), iron (Fe), aluminum (Al), and the like can be minimized. When the particle size of the classification is 0.15 mm or greater, contamination of the coarse-particle product with carbon (C), lithium (Li), cobalt (Co), nickel (Ni), manganese (Mn), and the like can be minimized.

In a case where sieving is used as a classification method, for example, classification is performed with stainless steel balls or alumina balls serving as a crush accelerator placed above a sieve that a finely crushed product attached to a coarsely crushed product is detached from the coarsely crushed product to thereby more efficiently separate the coarsely crushed product and the finely crushed product from each other. In this manner, a grade of recovered metals can be further improved.

Note that, the crushing process and the classification process may be simultaneously carried out. For example, the crushing process and the classification process may be performed as a crushing and classification step (crushing and classification) at which, while crushing the heat-treated product obtained at the heat treatment step, the crushed product is classified into a coarse-particle product and a fine-particle product.

Note that, the classification into the coarse-particle product and the fine-particle product may be repeated multiple times. The repetition of the classification can further reduce impurity contents of each product.

From a standpoint of increase in a cobalt (Co) content and nickel (Ni) content of the fine-particle product, for example, two-stage sieving is performed with a classification cut-point of greater than 1.2 mm, and a classification cut-point of 0.3 mm or greater and 1.2 mm or less. At the first stage, constituent members of the lithium-ion secondary battery having the mean particle size larger than cobalt and nickel, such as copper, iron, or the like, can be separated to be above the sieve. At the second stage, cobalt and nickel that are not sufficiently isolated from copper of the negative electrode collector or aluminum of the positive electrode collector are recovered above the sieve. At the second stage, cobalt, nickel, and carbon are recovered below the sieve. The product collected above the sieve at the second stage may be crushed again to facilitate liberation of cobalt and nickel from aluminum, followed by sieving again to recover cobalt and nickel below the sieve.

### <Slurry formation step>

The slurry formation step is a step of immersing the fine-particle product obtained at the crushing and classification step in water to form a fine-particle product slurry.

The slurry formation step is not particularly as long as the slurry formation step is a step that enables the fine-particle product recovered at the crushing and classification step to be immersed in water to obtain slurry. The slurry formation step may be appropriately selected according to the intended purpose.

In a case where the crushing step or the classification step is performed in a wet system, the crushing step or the classification step can be the slurry formation step.

Water used to immerse the fine-particle product is not particularly limited, and may be appropriately selected according to the intended purpose. Examples of the water include industrial water, tap water, pure water, such as ion-exchanged water, ultrafiltered water, reverse osmosis water, distilled water, ultrapure water, and the like. Among the above-listed examples, ion-exchanged water is preferably used because a production cost is relatively low and the ion-exchanged water has a low concentration of potassium that may possibly become an impurity for lithium carbonate.

A method of forming a fine particle slurry at the slurry formation step is not particularly limited, and may be appropriately selected according to the intended purpose. Examples of the method include: a method of simply adding the fine-particle product to water; a method of adding the fine-particle product to water and stirring; a method of adding the fine-particle product to water and gently stirring while applying ultrasonic waves; a method of adding water to the fine-particle product; a method in which a mist of water is sprayed onto the fine-particle product to humidify the fine-particle product, followed by adding the fine-particle product to water; and the like. The method of adding the fine-particle product to water and stirring is preferred, and the method in which a mist of water is sprayed onto the fine-particle product to humidify the fine-particle product, followed by adding the fine-particle product to water, is more preferred. According to the above method, magnetic separation can be performed while preventing dusting of the fine-particle product.

The solid-liquid ratio at the slurry formation step is not particularly limited, and may be appropriately selected according to the intended purpose. The solid-liquid ratio is preferably 5% or greater and 67% or less, and more preferably 10% or greater and 40% or less. When the solid-liquid ratio is less than 5%, a concentration of lithium in a leachate is reduced, and thus a recovery rate of lithium and concentration efficiency are likely to be lowered. When the solid-liquid ratio is greater than 67%, a leaching rate of lithium to water may be reduced. If slurry is fed to a subsequent step without diluting, problems, such as blockage of a pipe, and the like, may occur. If the slurry is supplied to the below-described wet magnetic separation step, a recovery rate of cobalt/nickel from a magnetic material and a recovery rate of carbon from a non-magnetic material may be reduced (i.e., insufficient separation of cobalt and nickel from carbon).

The speed of the stirring the slurry at the slurry formation step is not particularly limited, and may be appropriately selected according to the intended purpose. For example, the speed can be 400 rpm.

Duration of the stirring at the slurry formation step is not particularly limited, and may be appropriately selected according to the intended purpose. For example, the duration can be 1 hour.

### <Wet magnetic separation step>

At the wet magnetic separation step, wet magnetic separation is performed on the fine-particle product slurry to separate the fine-particle product slurry into a magnetic material and a non-magnetic material slurry. Note that, the "non-magnetic material slurry" encompasses a suspension liquid of a non-magnetic material.

The wet magnetic separation step is not particularly limited as long as the fine-particle product slurry can be separated into a magnetic material and a non-magnetic material slurry by wet magnetic separation. The wet magnetic separation step may be appropriately selected according to the intended purpose.

In the present invention, cobalt and nickel are separated as the magnetic material to be separated from the non-magnetic material slurry. Therefore, amounts of an acid and a neutralizing agent to be used for the non-magnetic material slurry can be reduced because the amounts thereof used for cobalt and nickel can be omitted.

The magnetic material has a high cobalt content and a high nickel content, and moreover has a low impurity content. Therefore, cobalt and nickel recovered by the wet magnetic separation step can be used as they are as raw materials (e.g., cobalt sulfate, nickel sulfate, etc.) for preparing production materials of secondary batteries or smelting raw materials of cobalt and nickel, without any additional concentration steps for Co and Ni, such as acid leading, neutralization, solvent extraction, and the like.

Moreover, lithium in the magnetic material may be recovered as lithium carbonate or lithium hydroxide by a process for obtaining production materials of secondary batteries or a process for obtaining smelting raw materials of cobalt and nickel. By recovering lithium from the magnetic material, 10% by mass or greater of lithium included in a lithium-ion secondary battery can be recovered as lithium carbonate or lithium hydroxide.

In the present specification, the magnetic material encompasses a material that creates an attraction force with a magnetic force source and is attracted toward the side of the magnetic power source by a magnetic force generated by the magnetic force source. The magnetic force source is a magnetic force source (e.g., a magnet, an electromagnet, etc.) configured to generate a magnetic force (magnetic field). Examples of the magnetic material include ferromagnetic metals and the like. Examples of the ferromagnetic metals include iron (Fe), nickel (Ni), cobalt (Co), and the like.

The non-magnetic material encompasses a material that is not attracted toward the side of the magnetic force source by a magnetic force generated by the magnetic force source. The non-magnetic material is not particularly limited, and may be appropriately selected according to the intended purpose. Moreover, examples of metals of the non-magnetic material include paramagnetic or diamagnetic metals. Examples of the paramagnetic or diamagnetic metals include aluminum (Al), manganese (Mn), gold (Au), silver (Ag), copper (Cu), and the like.

The wet magnetic separation step is not particularly limited, and may be performed by a wet magnetic separator (magnetic separation machine) available in the related art.

The wet magnetic separator usable in the present invention is not particularly limited, and may be appropriately selected according to the intended purpose. Examples of the wet magnetic separator include drum-type magnetic separators, high gradient magnetic separators, and the like.

When the wet magnetic separation step is performed, conditions of the wet magnetic separation are not particularly limited, and may be appropriately selected according to the intended purpose.

At the wet magnetic separation step, for example, cobalt (Co), nickel (Ni), manganese (Mn) combined with cobalt, and the like are recovered as the magnetic material.

When magnetic separation is performed on the fine-particle product obtained at the crushing and classification step, for example, if the magnetic separation is performed in a dry system, aggregation of particles occur due to the moisture between the particles, cobalt and nickel particles may not be sufficiently separated from metal particles derived from a negative electrode collector and negative electrode active material particles constituting 10% or greater of the fine-particle product. In the present invention, it is therefore preferred that a material derived from a negative electrode active material and a metal derived from a negative electrode collector are separated and recovered in the non-magnetic material slurry, and cobalt and nickel are recovered in the magnetic material.

A solid-liquid ratio of the slurry provided to the wet magnetic separation is not particularly limited, and may be appropriately selected according to the intended purpose. The solid-liquid ratio is preferably 5% or greater and 67% or less, and more preferably 10% or greater and 40% or less. When the solid-liquid ratio is less than 5%, a recovery rate of cobalt and nickel as the magnetic material in a wet magnetic separator may be reduced. When the solid-liquid ratio is greater than 67%, problems, such as blockage of a pump during supply of the slurry, are likely to occur, and separation of cobalt and nickel (magnetic material) from the non-magnetic material, such as carbon, may not be sufficient.

As the slurry, the fine-particle product slurry obtained at the slurry formation step may be supplied as it is, or the fine-particle product slurry obtained at the slurry formation step may be concentrated or diluted to adjust the solid-liquid ratio through solid-liquid separation, such as sedimentation separation. Moreover, water may be added to dilute the fine-particle product slurry to adjust the solid-liquid ratio.

A method of supplying the slurry is not particularly limited, and may be appropriately selected according to the intended purpose. The slurry in the tank may be supplied by a pump, while stirring.

A magnetic field strength of a magnetic separator used for the wet magnetic separation is preferably 500 G or greater and 20,000 G or less, more preferably 1,000 G or greater and 10,000 G or less, and particularly preferably 1,500 G or greater and 8,000 G or less. When the magnetic field strength is less than 500 G, cobalt and nickel particles, which are fine particles, are not easily magnetically attracted so that a rate of cobalt and nickel recovered in the magnetic material may be reduced. When the magnetic field strength is greater than 20,000 G, conversely, a rate of impurities, which are other than cobalt and nickel, recovered in the magnetic material increases so that a cobalt content and nickel content of the magnetic material may be reduced.

Since moisture is included in the magnetic material recovered at the wet magnetic separation step, the moisture may be removed from the magnetic material by solid-liquid separation using filter paper, a filter press, a centrifuge or the like, air drying, or heat drying using a drier.

After washing the obtained magnetic material with water, solid-liquid separation may be performed. In this case, an amount of fluorine, which cannot be removed from the magnetic material at the slurry formation step, can be reduced to, for example, less than 1%. When a filter press is used as a solid-liquid separation device, for example, the washing with water can be performed by pouring water into a filtration compartment of the filter press, in which the magnetic material is present. As a weight of water used for washing, 0.1 kg of greater of water is preferably passed through 1 kg of the acid leach residue, and 1 kg or greater of water is particularly preferably passed through 1 kg of the acid leach residue.

The wet magnetic separation may be performed multiple times (at multiple stages) at the wet magnetic separation step. For example, wet magnetic separation (precise selection) of a second stage is performed on the magnetic material recovered at the wet magnetic separation step of the first stage so that a cobalt (Co) content of the magnetic material is increased. In this case, conditions of the wet magnetic separation of the second stage may be different from those of the first stage. By setting the conditions of the wet magnetic separation of the second stage to be conditions (e.g., low magnetic field strength, high number of revolution of the drum of the magnetic separator, high feeding speed, and the like) under which recovery of the magnetic material is more difficult compared to the wet magnetic separation of the first stage, the cobalt (Co) content of the magnetic material recovered by the wet magnetic separation of the second stage can be increased from the cobalt (Co) content of the magnetic material recovered by the wet magnetic separation of the first stage, and moreover a recovery rate of carbon (C) recovered as a non-magnetic material slurry can be improved compared to that in the wet magnetic separation of the first stage.

As another example, moreover, wet magnetic separation (cleaning selection) of a second stage is performed on the non-magnetic material slurry recovered at the wet magnetic separation step of the first stage so that a cobalt (Co) content of the non-magnetic material slurry can be reduced. In this case, conditions of the wet magnetic separation of the second stage may be different from those of the first stage. By setting the conditions of the wet magnetic separation of the second stage to be conditions (e.g., high magnetic field strength, low number of revolution of the drum of the magnetic separator, low feeding speed, and the like) under which recovery of the magnetic material becomes easier compared to the wet magnetic separation of the first stage, the cobalt content of the non-magnetic material slurry recovered by the wet magnetic separation of the second stage can be reduced from the cobalt content of the non-magnetic material slurry recovered by the wet magnetic separation of the first stage, and a recovery rate of cobalt recovered as the magnetic material can be improved compared to that in the wet magnetic separation of the first stage. Water may be added to the non-magnetic material slurry obtained by the wet magnetic separation. By adjusting a concentration of lithium (Li), loss of lithium due to inclusion thereof in a neutralization residue can be inhibited at the below-described neutralization step.

### <Acid leaching step>

At the acid leaching step, sulfuric acid is added to the non-magnetic material slurry and/or the non-magnetic material obtained through solid-liquid separation of the non-magnetic material slurry to adjust pH to 0 or greater and 3.5 or less to thereby leach the non-magnetic material, followed by performing solid-liquid separation to obtain an acid leachate and an acid leach residue.

In the obtained acid leachate, water-soluble lithium, such as lithium carbonate, lithium fluoride, lithium oxide, and the like, and sparingly water soluble lithium derived from LiAlO₂ (lithium aluminate) are dissolved. In the obtained acid leach residue, carbon (C) is concentrated at a high concentration so that the acid leach residue can be collected and used as a carbon (C) concentrate.

Solid-liquid separation for separating the acid leachate and the acid leach residue (carbon concentrate) from each other is preferably performed, for example, by using filter paper, a filter press, a centrifuge, or the like.

At the acid leaching step, sulfuric acid is used as an acid solution. A concentration of sulfuric acid to be added is preferably 5% by mass or greater and 90% by mass or less, and more preferably 10% by mass or greater and 80% by mass or less. Since sulfuric acid at the above concentration is used, deterioration of a tank due to heat generation or permeation of the acid solution (including, as well as sulfuric acid derived from the added sulfuric acid, hydrofluoric acid derived from fluorine of an electrolyte of the lithium-ion secondary battery) can be inhibited at the acid leaching step.

The pH of the acid solution used at the acid leaching step is 0 or greater and 3.5 or less, more preferably 0 or greater and 3 or less, yet more preferably 1 or greater and 3 or less, and particularly preferably 1.5 or greater and 2.5 or less. When the pH is greater than 3.5, lithium aluminate in the filtration residue is not effectively dissolved in the acid solution. In the present specification, the pH of the acid solution encompasses pH of the acid solution at the end of the acid leaching step. When the pH of the acid solution is 0 or greater and 3.5 or less, 80% or greater of the lithium in the non-magnetic material can be leached so that a carbon concentrate (acid leach residue) having a carbon content of 80% or greater can be obtained. The pH in the range of 0 or greater and 3 or less is preferred because lithium can be leached without reducing the acid leaching rate of the lithium and with the minimum amount of the acid added compared to a case of pH being 0. The pH in the range of 1.5 or greater and 2.5 or less is particularly preferred because lithium can be leached without reducing the acid leaching rate of the lithium, and leaching of copper included in the non-magnetic material slurry can be inhibited to obtain the acid leachate having a low concentration of impurities compared to a case of pH being 0. Note that, when copper included in the acid leach residue (carbon concentrate) is used as a smelting raw material (reducing agent), a problem may not occur. Moreover, as acid leaching is performed by adding an oxidizing agent to the acid leach residue, copper can be leached into the leachate so that a carbon concentrate of higher grade can be recovered.

When the pH is less than 0, a concentration of sulfuric acid ions in the acid leachate becomes high so that loss of lithium due to inclusion thereof in a neutralized cake obtained at the neutralization step increases.

The lithium concentration and sulfuric acid ion concentration of the acid leachate are preferably less than 4,000 mg/L and 60,000 mg/L or less, respectively, in order to reduce loss of lithium through coprecipitation or adsorption because of a large amount of the neutralized cake formed at the neutralization step.

Here, the leaching method at the acid leaching step is not particularly limited, and may be appropriately selected according to the intended purpose. Examples of the leaching method include: a method of simply adding the non-magnetic material slurry to an acid; a method of adding the non-magnetic material slurry to an acid and stirring; a method of adding the non-magnetic material slurry to an acid and stirring; a method of adding an acid to the non-magnetic material slurry; a method where an acid is added to the non-magnetic material slurry, followed by stirring; and the like. As the acid leaching method, for example, the method of adding an acid to the non-magnetic material slurry is preferred, and the method in which an acid is added to the non-magnetic material slurry, followed by stirring is more preferred. By adding an acid to the non-magnetic material slurry, local temperature elevation or bumping due to heat generation is inhibited when the non-magnetic material reacts with the acid.

The speed of stirring sulfuric acid at the acid leaching step is not particularly limited, and may be appropriately selected according to the intended purpose. For example, the speed can be set at 200 rpm.

The fluid temperature during the acid leaching is preferably 0°C or higher and 80°C or lower, and more preferably 10°C or higher and 60°C or lower. In the acid leachate, fluorine derived from LiPF₆ (lithium hexafluorophosphate), which is an electrolyte included in an electrolytic solution of the lithium-ion secondary battery, is dissolved as hydrofluoric acid. By setting the liquid temperature at 60°C or lower during the acid leaching, generation of hydrofluoric acid vapor, which is a toxic and corrosive gas, can be inhibited.

An oxidizing agent may be added for acid leaching. As the oxidizing agent is added, dissolution of impurities (e.g., copper), which is not easily dissolved in an acid, such as a copper is facilitated so that a carbon (C) content of a carbon (C) concentrate (acid leach residue) is increased. The oxidizing agent is not particularly limited, and may be appropriately selected according to the intended purpose. Examples of the oxidizing agent include hydrogen peroxide, hypochlorous acid, chlorous acid, chloric acid, perchloric acid, halogen, permanganate, ozone, air, and the like.

Leaching duration at the acid leaching step is not particularly limited, and may be appropriately selected according to the intended purpose. For example, the leaching duration can be set for 1 hour.

A carbon (C) content of the acid leach residue obtained at the acid leaching step is preferably 80% or greater, and more preferably 90% or greater.

In a case where the acid leach residue (carbon (C) concentrate) is used as a reducing agent for smelting, moreover, phosphorous (P) and fluorine (F) are preferably removed from the acid leach residue (carbon (C) concentrate) as much as possible because phosphorous is an element to be avoided in steel smelting, and fluorine is an element that imposes a load on exhaust gas processing of smelting.

Moreover, the carbon (C) concentrate includes copper (Cu) as a major impurity. The separation of the copper can be performed by dispersion of carbon and precipitation of copper using a dispersing agent, recovery of copper in tailings by floatation, recovery of copper in a heavy product by gravity separation, or the like.

Water may be added to the acid leachate in order to adjust a concentration of lithium (Li) in the acid leachate obtained at the acid leaching step. By reducing the concentration of the lithium (Li), loss of lithium (Li) due to inclusion thereof in a washing liquid residue can be prevented at the below-described neutralization step.

The acid leach residue may be washed with water. After washing with water, solid-liquid separation may be performed. There is a case where an acid solution is attached to the acid leach residue. By washing the acid leach residue with water, an amount of the attached acid solution can be reduced. In a case where sulfuric acid is used as the acid solution, for example, a sulfuric acid content of the acid leach residue can be reduced by performing solid-liquid separation after washing the acid leach residue with water. In a case where a filter press is used as a solid-liquid separation device, for example, the above washing with water can be performed by pouring water into a filtration compartment of the filter press in which the acid leach residue is present. As a weight of water used for washing, 0.1 kg or greater of water is preferably passed through 1 kg of the acid leach residue, and 1 kg of greater of water is more preferably passed through 1 kg of the acid leach residue.

### <Neutralization step>

The neutralization step is a step of neutralizing the acid leachate, which is obtained at the acid leaching step, with calcium hydroxide.

An aim of the neutralization step is to neutralize the acid leachate, and to perform separation through solidification (formation of a neutralized cake) of impurity ions (e.g., boron ions, fluorine ions, sulfuric acid ions, cobalt ions, nickel ions, aluminum ions, copper ions, etc.) other than lithium (Li) and solid-liquid separation.

The present inventors have found that, as calcium hydroxide is added to the acid leachate including sulfuric acid ions and aluminum ions, a concentration of a boron ion in the neutralized liquid can be reduced to less than 0.1 mg/L. As the mechanism thereof, it is assumed that boron is used and removed by a reaction between aluminum sulfate and calcium hydroxide to generate ettringite or a reaction among phosphorous and ammonium ions (assumed to be ammonium ions derived from aluminum nitride generated by the heat treatment) in the leachate and calcium hydroxide to generate hydroxyapatite. In order to remove boron, the acid leachate preferably includes 500 mg/L or greater of the aluminum ions, and more preferably 1,000 mg/L or greater of the aluminum ions. The aluminum ion concentration can be adjusted by dissolving aluminum (mainly derived from a positive electrode collector) included in the fine-particle product at the time of the acid leaching. Moreover, a phosphorous concentration of the neutralized liquid can be reduced to 1 mg/L by the above reactions so that a phosphorous content of the recovered lithium carbonate can be reduced to less than 10 ppm.

The neutralization step may include neutralization at multiple pH levels, or multiple stages of solid-liquid separation. For example, after performing neutralization of the first stage at pH 9, the liquid obtained by solid-liquid separation of the first stage is again adjusted to elevate pH to 12 (neutralization of the second stage), followed by performing solid-liquid separation of the second stage.

As the alkali, at least calcium hydroxide (Ca(OH)₂; slaked lime) is used, and two or more alkalis selected from calcium carbonate, calcium oxide, calcium aluminate, calcium phosphate, and the like may be used in combination. By adding an aluminum compound, such as aluminum sulfate, calcium aluminate, aluminum chloride, aluminum hydroxide, or the like, before adding the alkali, an amount of boron to be removed may be further reduced compared to a case where an alkali is used alone. The alkali may be added as a solid, or may be added as slurry.

Since a sulfuric acid ion and a calcium ion form calcium sulfate, the sulfuric acid ions are separated as a solid (calcium sulfate) through solid-liquid separation.

The pH after the neutralization is preferably 10.5 or greater and 14 or less, and more preferably 11 or greater and 13 or less. Here, the pH of the solution indicates pH at the end of the neutralization step. When the pH is 10.5 or greater and 14 or less, an amount of the calcium ions dissolved and present in the solution can be reduced (a load imposed on subsequent steps, which are the calcium carbonate crystallization step and the calcium adsorption and removal step, can be reduced), and at the same time, boron in the acid leachate is efficiently removed regardless of a low concentration of the calcium ions. In addition, CO₂ added at the lithium carbonate crystallization step can be stably absorbed and dissolved as CO₃²⁻ ions. Moreover, manganese ions can be removed through sedimentation at a high removal rate.

An amount of the lithium in the liquid obtained through solid-liquid separation of the slurry at the neutralization step is preferably 50% by mass or greater, and more preferably 70% by mass or greater, relative to 100% by mass of the amount of the lithium contained in the fine-particle product.

In order to adjust the lithium concentration of the slurry obtained at the neutralization step or a liquid obtained by performing solid-liquid separation on the slurry, water may be added to the slurry or the liquid. Loss of lithium (Li) can be prevented by reducing the above lithium (Li) concentration.

### <Neutralized cake solid-liquid separation step>

The neutralized cake solid-liquid separation step is a step of performing solid-liquid separation on the neutralized liquid obtained at the neutralization step.

A method of the solid-liquid separation is not particularly limited, and may be appropriately selected according to the intended purpose. The method is preferably a method where solid-liquid separation is performed through suction filtration using filter paper or the like, pressure filtration using a filter press or the like, or centrifugal separation using a centrifuge or the like. Among the above-listed examples, pressure filtration is particularly preferred. By pressure filtration, a moisture content of the cake can be efficiently reduced compared to other filtration methods, such as suction filtration and the like, so that loss of lithium due to inclusion thereof in the neutralized cake can be reduced. By passing water through the neutralized cake in the pressure filtration device, lithium included in the moisture in the neutralized cake can be extracted into the passing water.

### <Calcium carbonate crystallization step>

The calcium carbonate crystallization step is a step of adding CO₂ to the liquid obtained at the neutralized cake solid-liquid separation step.

In the liquid obtained at the neutralized cake solid-liquid separation step, calcium ions are included in an amount of approximately 100 mg/L to approximately 1,000 mg/L. The calcium dissolved and present in the liquid reacts with CO₂, which is present the air, to crystallize calcium carbonate. When the calcium adsorption and removal step is performed on the resultant liquid, efficiency of calcium adsorption and removal may be reduced due to blockage of a resin column, deposition of calcium carbonate on a surface of the resin, or the like.

At the calcium carbonate crystallization step, therefore, CO₂ is added to the liquid obtained at the neutralized cake solid-liquid separation step to crystallize calcium as calcium carbonate to thereby reduce an amount of dissolved calcium.

A method of adding CO₂ is not particularly limited, and may be appropriately selected according to the intended purpose. Examples of the method include: a method of adding a gas including CO₂, such as air and the like, to the liquid; a method of adding a carbonic acid salt, such as sodium carbonate; and the like.

Examples of the method of adding a gas including CO₂ include: a method where the liquid is simply left to stand in a gas including CO₂; a method where a gas including CO₂ is diffused in the liquid; a method where the liquid is stirred while blowing a gas including CO₂ into the liquid; and the like.

An amount of added CO₂ is 0.1 or greater in a molar ratio to the calcium ions of the liquid obtained at the neutralized cake solid-liquid separation step and 0.5 or less in a molar ratio to the lithium ions of the liquid obtained at the neutralized cake solid-liquid separation step, more preferably 0.5 or greater in the molar ratio to the calcium ions and 0.25 or less in the molar ratio to the lithium ions, and particularly preferably 0.8 or greater in the molar ratio to the calcium ions and 0.1 or less in the molar ratio to the lithium ions. When CO₂ in an amount of 0.1 or greater in the molar ratio to the calcium ions is supplied, the calcium ions can be crystallized as calcium carbonate. When CO₂ in an amount of 0.5 or less in the molar ratio to the lithium ions is supplied, crystallization of lithium carbonate at the calcium carbonate crystallization step, the calcium adsorption and removal step, the first concentration step, and the second concentration step can be prevented.

### <Calcium carbonate solid-liquid separation step>

The calcium carbonate solid-liquid separation step is a step of performing solid-liquid separation on the liquid obtained at the calcium carbonate crystallization step to remove calcium carbonate from the liquid.

A method of the solid-liquid separation is not particularly limited, and may be appropriately selected according to the intended purpose. Examples of the method include a method of performing solid-liquid separation through suction filtration using filter paper or the like, pressure filtration using a filter press or the like, or centrifugal separation using a centrifuge or the like, and the like. Among the above-listed examples, pressure filtration is particularly preferred. By performing solid-liquid separation through pressure filtration, a moisture content of the neutralized cake can be effectively reduced compared to other filtration methods, such as suction filtration and the like so that loss of lithium due to inclusion thereof in the neutralized cake can be reduced.

### <First concentration step>

The method of recovering valuable materials of the present invention preferably includes a first concentration step before the below-described calcium adsorption and removal step. At the first concentration step, lithium included in the liquid obtained at the calcium carbonate crystallization step is concentrated by electrodialysis.

Since the first concentration step is included, for example, a concentration of lithium in the solution can be increased to a concentration at which lithium can be easily crystallized as lithium carbonate at the lithium carbonate crystallization step.

At the first concentration step, the concentration is carried out by electrodialysis. Therefore, the production speed of lithium carbonate can be increased 5 times the speed of production performed through concentration by evaporation. Moreover, a small amount of lithium is dissolved in a dilute solution recovered by electrodialysis. The lithium in the dilute solution is however reused at the slurry formation step so that the lithium can be recovered and an amount of water used at the slurry formation step can be reduced.

In a case where calcium ions are included in a raw material solution, calcium ions may be adsorbed on an ion-exchange membrane of an electrodialysis device, which may cause a problem such that the adsorbed calcium ions block the membrane. However, the above problem can be avoided by performing the first concentration step on the liquid after the calcium carbonate separation step (the liquid in which an amount of calcium is reduced to 10 mg/L or less).

There may be sometimes a case where calcium is adsorbed and retained on the ion-exchange membrane used for electrodialysis. In a cation-exchange membrane, cation-exchange groups are fixed to the membrane. As counterions, cations in the liquid are passed through the membrane while repeating adsorption and separation. Therefore, a certain amount of cations is retained in the ion-exchange membrane after electrodialysis. Since the first concentration step is performed before the calcium adsorption and removal step, even if the calcium ions retained in the ion-exchange membrane are migrated into the lithium solution, the calcium ion concentration of the lithium solution can be reduced at the subsequent calcium adsorption and removal step so that lithium carbonate having a calcium content of 100 ppm or less can be recovered.

### <Calcium adsorption and removal step>

The calcium adsorption and removal step is a step of adsorbing and removing calcium using a chelating resin after the neutralization step.

A plurality of types of resin columns may be used at the calcium adsorption and removal step.

By bringing the neutralized liquid into contact with the chelating resin, a trace of calcium ions remaining in the neutralized liquid can be adsorbed on the chelating resin to remove the calcium ions. In the above manner, a calcium content of the lithium carbonate can be reduced even more. The chelating resin can more selectively separate calcium from lithium, compared to a cation exchange resin. Moreover, the chelating resin removes Ca²⁺ without supplying CO₃²⁻ ions (a liquid after the calcium adsorption and removal is obtained), and thus CO₃²⁻ions are not dissolved in the liquid after the Ca adsorption and removal. As a result, the liquid after the calcium adsorption and removal can be concentrated at a lithium concentration exceeding 5,000 mg/L without precipitating lithium carbonate. Therefore, any problem (e.g., precipitation of lithium carbonate on the ion-exchange membrane or blockage of the ion-exchange membrane) does not occur at the below-described second concentration step so that a high concentration factor can be achieved. Moreover, the lithium concentration can be increased before the lithium carbonate crystallization step, thus the cost and time for recovering lithium carbonate at the lithium carbonate crystallization step can be reduced. Moreover, slaked lime is used at the neutralization step in the present invention, and the concentration of calcium in the neutralized liquid can be adjusted to 1,000 mg/L or less. Further, the concentration of calcium in the liquid after the calcium carbonate solid-liquid separation step can be adjusted to 10 mg/L or less by performing the calcium carbonate crystallization step and the calcium carbonate solid-liquid separation step. Therefore, an amount of the chelating resin used per unit amount of the neutralized liquid is small, and therefore removal of calcium can be performed at low cost (economically).

The chelating resin is preferably an aminophosphoric acid group-containing chelating resin or an iminodiacetic acid group-containing chelating resin, and particularly preferably an iminodiacetic acid group-containing chelating resin. There is sometimes a case where part of copper ions remains in the neutralized liquid. By using the iminodiacetic acid group-containing chelating resin, remaining copper ions can be adsorbed and removed so that the concentration of the copper in the liquid after calcium adsorption and removal can be adjusted to less than 0.1 mg/L and a copper content of lithium carbonate recovered can be adjusted to less than 10 ppm.

As the liquid feeding speed to the chelating resin, a space velocity (SV) is preferably 0.5 or greater and 15 or less, more preferably 1 or greater and 10 or less, and particularly preferably 2 or greater and 5 or less. When the SV is 0.5 or greater and 15 or less, a concentration of calcium in the liquid after the calcium adsorption and removal can be adjusted to be less than 0.1 mg/L.

### <Second concentration step>

The method of recovering valuable materials of the present invention preferably includes a second concentration step after the calcium adsorption and removal step. At the second concentration step, lithium in the liquid after the calcium adsorption and removal can be concentrated by electrodialysis.

Since the second concentration step is included, for example, a concentration of lithium in the solution can be increased to a concentration at which lithium can be easily crystallized as lithium carbonate at the lithium carbonate crystallization step.

At the second concentration step, the concentration is carried out by electrodialysis. Therefore, the production speed of lithium carbonate can be increased 5 times the speed of production performed through concentration by evaporation. Moreover, a small amount of lithium is dissolved in a dilute solution recovered by electrodialysis. The lithium in the dilute solution is however reused at the slurry formation step so that the lithium can be recovered and an amount of water used at the slurry formation step can be reduced.

In a case where the second concentration step is performed, part of the liquid obtained at calcium adsorption and removal step is passed through a membrane of an electrodialysis device and is subjected to electrodialysis to wash the membrane before the second concentration step. There may be sometimes a case where calcium is adsorbed and retained on the ion-exchange membrane used for electrodialysis. In a cation-exchange membrane, cation-exchange groups are fixed to the membrane. As counterions, cations in the liquid are passed through the membrane while repeating adsorption and separation. Therefore, a certain amount of cations is retained in the ion-exchange membrane after electrodialysis. By passing part of the liquid obtained at the calcium adsorption and removal step and performing electrodialysis, calcium retained in the ion-exchange membrane can be substituted with lithium. As the above washing is performed, calcium contamination derived from the ion-exchange membrane can be prevented at the second concentration step.

The liquid including calcium after the washing can be processed by returning the liquid back to the calcium adsorption and removal step.

### <Lithium carbonate crystallization step>

At the lithium carbonate crystallization step, lithium carbonate is selectively crystallized using a difference in solubility between lithium carbonate and other lithium salts (e.g., lithium sulfate and lithium fluoride).

Carbon dioxide (CO₂) is added to the concentrate including lithium, which is obtained after the calcium adsorption and removal step or the second concentration step. Therefore, crystallization of lithium carbonate is facilitated in the concentrate including lithium so that lithium carbonate is predominantly crystallized over lithium (e.g., lithium fluoride and the like) bonded to other impurities (e.g., fluorine and the like), thus lithium carbonate of higher grade can be recovered.

Moreover, a method of adding carbon dioxide to the concentrate including lithium is not particularly limited, and may be appropriately selected according to the intended purpose. The addition of carbon dioxide may be performed by blowing a gas including carbon dioxide or adding a carbonic acid salt, but addition of a carbonic acid salt is preferred, and addition of sodium carbonate is particularly preferred.

As a concentration of carbonic acid ions in the concentrate including lithium after supply of carbon dioxide, a carbonic acid ion concentration is preferably 2 or greater relative to a lithium concentration being 1, the carbonic acid ion concentration is more preferably 3 or greater relative to the lithium concentration being 1, and the carbonic acid ion concentration is particularly preferably 4 or greater and 32.3 or less relative to the lithium concentration being 1. When the carbonic acid ion concentration is less than 2 relative to the lithium concentration being 1, an amount of lithium sulfate precipitated increases in addition to lithium carbonate so that an industrial grade of lithium carbonate (lithium carbonate content of 99.0% or greater) may not be crystallized. When the carbonic acid ion concentration is greater than 32.3 relative to the lithium concentration being 1, lithium carbonate absorbs the liquid in which a metal derived from a carbonic acid salt added for dissolving the carbonic acid ions is dissolved so that an excessive amount of the metal content derived from the carbonic acid salt is included in the lithium carbonate.

The liquid is preferably continuously stirred during the lithium carbonate crystallization. The stirring homogenizes the concentration distribution of carbonic acid ions and impurity ions (e.g., fluorine ions and sulfuric acid ions), and homogenizes a particle size of crystallized lithium carbonate. As a result, crystallization of impurities or inclusion of the liquid within the crystallized lithium carbonate can be minimized so that a impurity content of the recovered lithium carbonate can be reduced.

At the time of lithium carbonate crystallization, the crystallization step is initiated or continued in a state where crystals of lithium carbonate are added in advance or added during the crystallization. The addition of the crystals (seed crystals) can improve and homogenize a particle size of crystallized and recovered lithium carbonate so that a moisture content of the crystals of lithium carbonate can be reduced and an impurity content derived from the moisture component can be further reduced.

The lithium carbonate crystallization step is preferably performed while heating the concentrate including lithium. By heating the concentrate including lithium, solubility of lithium carbonate is reduced so that a recovery amount of lithium carbonate can be increased.

A method of heating the concentrate including lithium is not particularly limited, and may be appropriately selected according to the intended purpose. Examples of the method include a method of heating using an electric heater or a pipe of copper, stainless steel, Teflon (registered trademark), or the like through which heated vapor is passed.

For example, a temperature of the concentrate including lithium when the concentrate including lithium is heated to crystallize lithium carbonate is not particularly limited, expect that the temperature is a temperature at which lithium carbonate can be crystallized. The temperature may be appropriately selected according to the intended purpose. For example, the temperature is preferably 60°C or higher and 105°C or lower.

### <<Recovery of lithium carbonate as valuable material>>

The slurry including lithium carbonate obtained at the lithium carbonate crystallization step is subjected to solid-liquid separation to separate the slurry into lithium carbonate (solid) and a liquid after crystallization, thereby recovering lithium carbonate.

A method of the solid-liquid separation is not particularly limited, and may be appropriately selected according to the intended purpose. The method is preferably a method of performing solid-liquid separation through suction filtration using filter paper or the like, pressure filtration using a filter press or the like, or centrifugal separation using a centrifuge or the like. Among the above-listed example, pressure filtration is particularly preferred. By performing solid-liquid separation through pressure filtration, a moisture content of lithium carbonate can be efficiently reduced compared to other filtration methods, such as suction filtration and the like. By passing water through the lithium carbonate cake in the pressure filtration device, moreover, sulfuric acid ions, sodium ions, and potassium ion in the lithium carbonate can be extracted in the passing water.

The recovered lithium carbonate is preferably washed (washed with warm water) by supplying warm water. The sulfuric acid component included in the lithium carbonate recovered according to the present invention is derived from sulfuric acid ions included in the moisture absorbed by the lithium carbonate, not crystals (lithium sulfate). Therefore, the sulfuric acid component can be removed by washing with warm water so that a sulfuric acid content of the lithium carbonate can be further reduced. Moreover, the recovered lithium carbonate includes potassium derived from constituent members of a lithium-ion secondary battery, but the potassium can be also removed by washing with warm water. A temperature of the warm water is preferably 60°C or higher, more preferably 80°C or higher. The higher the temperature of the warm water is, the smaller the amount of the lithium carbonate dissolved in the warm water is, leading to a reduction in loss of the lithium carbonate due to dissolution thereof in the warm water.

By washing the lithium carbonate with warm water, for example, lithium carbonate having both a sulfuric acid content and sodium content of 0.5% by mass or less, and a potassium content of 50 ppm or less can be obtained.

A liquid after the crystallization (post-crystallization liquid) from which lithium carbonate has been recovered includes lithium ions and sulfuric acid ions. A recovery rate of lithium can be further improved by returning the post-crystallization liquid back to the neutralization step to process the post-crystallization liquid again. In the manner as described above, lithium carbonate having a boron content of less than 1 ppm and a calcium content of 100 ppm or less can be recovered from the lithium-ion secondary battery.

### <First embodiment>

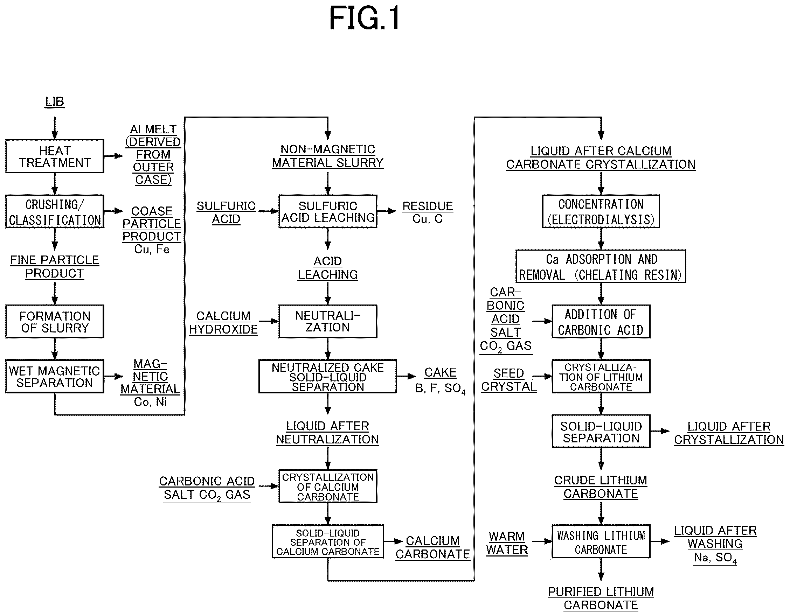

One example of the embodiment of the method of recovering valuable materials of the present invention will be described with reference to drawings hereinafter. Fig. 1 is a chart depicting one example of a process flow according to a first embodiment of the method of recovering valuable materials of the present invention.

First, a heat treatment (heat treatment step) is performed on a lithium-ion secondary battery (LIB: Lithium Ion Battery) to obtain a LIB heat-treated product.

Next, crushing and classification (crushing and classification step) are performed on the LIB heat-treated product to thereby obtain a coarse-particle product and a fine-particle product. At the above process, copper (Cu), iron (Fe), or the like can be separated as the coarse-particle product.

Subsequently, the fine-particle product is immersed in water to obtain the fine-particle product slurry.

Next, the fine-particle product slurry is subjected to wet magnetic separation to separate the fine-particle product slurry into a magnetic material and non-magnetic material slurry. Nickel (Ni), cobalt (Co), and manganese (Mn) combined with cobalt are included in the magnetic material.

Lithium aluminate, carbon, copper (remaining without being recovered in the coarse-particle product), and lithium (water soluble) are included in the non-magnetic material slurry.

Next, sulfuric acid is added to the non-magnetic material slurry to acid leach the lithium within the lithium aluminate, which is included in the non-magnetic material, followed by performing solid-liquid separation to separate into a filtrate (acid leachate) and a filtration residue (carbon concentrate).

Next, calcium hydroxide is added to the acid leachate, and the resultant mixture is subjected to solid-liquid separation through pressure filtration using a filter press to thereby separate the acid leachate into a liquid (neutralized liquid) including lithium and solids including impurities, such as boron, fluorine, aluminum, and the like. Sodium carbonate is added to the neutralized liquid to perform calcium carbonate crystallization, followed by performing pressure filtration on the resultant liquid to perform solid-liquid separation. The liquid obtained after the calcium carbonate solid-liquid separation is concentrated by electrodialysis to obtain a lithium concentrate. A trace of calcium ions in the lithium concentrate, which cannot be removed by the calcium carbonate crystallization, is adsorbed on a chelating resin to remove calcium, to thereby obtain a liquid after the calcium adsorption and removal. Lithium carbonate serving as a seed crystal is added to the liquid after calcium adsorption and removal, followed by heating the liquid. Then, sodium carbonate is added to the liquid to crystallize lithium as lithium carbonate (Li₂CO₃), thereby recovering lithium.

In the first embodiment, the lithium-ion secondary battery is subjected to the heat treatment, crushing and classification are performed to obtain the fine-particle product, and the obtained fine-particle product is immersed in water to obtain the fine-particle product slurry. The obtained fine-particle product slurry is subjected to the wet magnetic separation to obtain the non-magnetic material slurry, and sulfuric acid is added to the obtained non-magnetic material slurry to perform acid leaching, followed by performing the pressure filtration using the filter press to perform solid-liquid separation to obtain the neutralized liquid. After adding CO₂ to the obtained neutralized liquid, solid-liquid separation is performed to obtain the liquid from which the calcium carbonate is removed as calcium. The trace of calcium ions remaining in the liquid is adsorbed with the chelating resin to remove the calcium ions, to thereby recover lithium carbonate having a boron content of less than 1 ppm and a calcium content of 100 ppm or less from the lithium-ion secondary battery.

### <Second embodiment>

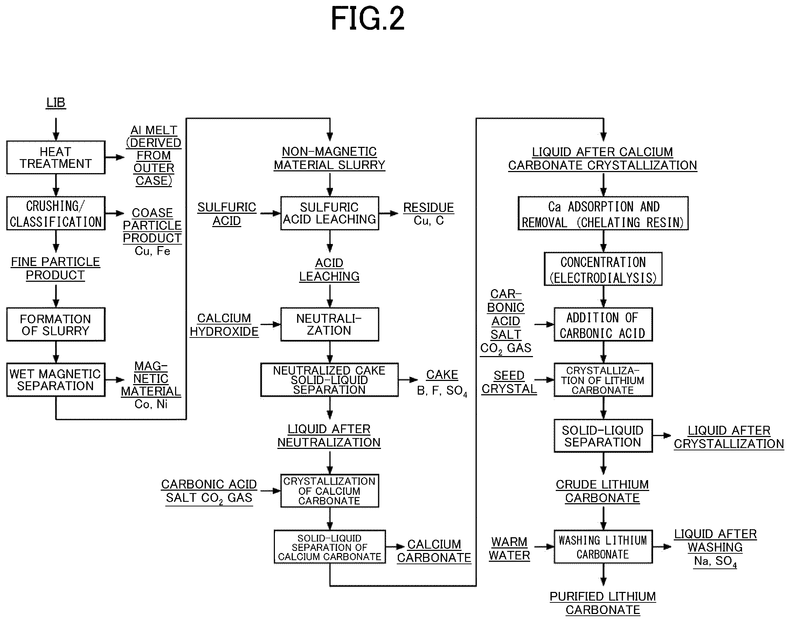

Fig. 2 is a chart depicting one example of a process flow according to a second embodiment of the method of recovering valuable materials of the present invention.

First, a heat treatment (heat treatment step) is performed on a lithium-ion secondary battery (LIB: Lithium Ion Battery) to obtain a LIB heat-treated product.

Next, crushing and classification (crushing and classification step) are performed on the LIB heat-treated product to thereby obtain a coarse-particle product and a fine-particle product. At the above process, copper (Cu), iron (Fe), or the like can be separated as the coarse-particle product.

Subsequently, the fine-particle product is immersed in water to obtain the fine-particle product slurry.

Next, the fine-particle product slurry is subjected to wet magnetic separation to separate the fine-particle product into a magnetic material and non-magnetic material slurry. Nickel (Ni), cobalt (Co), and manganese (Mn) combined with cobalt are included in the magnetic material.

Lithium aluminate, carbon, copper (remaining without being recovered in the coarse-particle product), and lithium (water soluble) are included in the non-magnetic material slurry.

Next, sulfuric acid is added to the non-magnetic material slurry to acid leach the lithium within the lithium aluminate, which is included in the non-magnetic material, followed by performing solid-liquid separation to separate into a filtrate (acid leachate) and a filtration residue (carbon concentrate).

Next, calcium hydroxide is added to the acid leachate, and the resultant mixture is subjected to solid-liquid separation through pressure filtration using a filter press to thereby separate the acid leachate into a liquid (neutralized liquid) including lithium and solids including impurities, such as boron, fluorine, aluminum, and the like. Sodium carbonate is added to the neutralized liquid to perform calcium carbonate crystallization, followed by performing pressure filtration on the resultant liquid to perform solid-liquid separation. A trace of calcium ions in the lithium concentrate, which cannot be removed by the calcium carbonate crystallization, is adsorbed on a chelating resin to remove calcium, to thereby obtain a liquid after the calcium adsorption and removal. Part of the obtained liquid after the calcium adsorption and removal is used to wash the ion-exchange membrane of the electrodialysis device through the liquid passage and electrodialysis, and the remaining liquid after the calcium adsorption and removal is concentrated through electrodialysis to thereby obtain a lithium concentrate. Lithium carbonate serving as a seed crystal is added to the lithium concentrate, followed by heating the concentrate. Then, sodium carbonate is added to the concentrate to crystallize lithium as lithium carbonate (Li₂CO₃), thereby recovering lithium.

In the second embodiment, the lithium-ion secondary battery is subjected to the heat treatment, crushing and classification are performed to obtain the fine-particle product, and the obtained fine-particle product is immersed in water to obtain the fine-particle product slurry. The obtained fine-particle product slurry is subjected to the wet magnetic separation to obtain the non-magnetic material slurry, and sulfuric acid is added to the obtained non-magnetic material slurry to perform acid leaching, followed by performing the pressure filtration using the filter press to perform solid-liquid separation to obtain the neutralized liquid. After adding CO₂ to the obtained neutralized liquid, solid-liquid separation is performed to obtain the liquid from which the calcium carbonate is removed as calcium. The trace of calcium ions remaining in the liquid is adsorbed with the chelating resin to remove the calcium ions, to thereby recover lithium carbonate having a boron content of less than 1 ppm and a calcium content of 100 ppm or less from the lithium-ion secondary battery.

### Examples

The present invention will be described through Examples and Comparative Examples hereinafter, but these Examples shall not be construed as limiting the scope of the present invention in any way.

### (Example 1)

### <Heat treatment>

As depicted in the process flow of Fig. 1, a heat treatment step, a crushing step, a classification step, a magnetic separation step, and a wet separation step were performed on 300 kg of a lithium-ion secondary battery pack for a vehicle, whose outer case (housing) was formed of aluminum (including iron in some of parts) (the lithium-ion secondary battery included a positive electrode collector that was an aluminum foil, a negative electrode collector that was a copper foil, a negative electrode active material that was a carbon material, and an electrolytic solution that included fluorine), to thereby recover valuable materials. The details are as follows.

The heat treatment was performed on the lithium-ion secondary battery pack at the heat treatment temperature of 800°C (heating from 20°C to 800°C over the period of 15 minutes, and retained at 800°C for 2 hours) in the ambient atmosphere by a fixed bed furnace having a cylindrical interior shape (4,300 mm in diameter × 6,500 mm in height) serving as a heat treatment apparatus. For the heat treatment, the lithium-ion secondary battery pack for a vehicle was placed on a receiving tray for recovering aluminum derived from the housing, and the aluminum derived from the housing was melted and collected as a melt on the receiving tray.

### <Crushing and classification>

Subsequently, at the crushing step, the lithium-ion secondary battery to which the heat treatment was performed was crushed by a hammer crusher (Makino-type swing hammer crusher HC-20-3.7, manufactured by MAKINO MFG. CO., LTD.) serving as a crushing apparatus at 50 Hz (circumferential speed of hammer: 38 m/s) with a punched metal having an opening diameter of 10 mm disposed at the outlet, to thereby obtain a crushed product of the lithium-ion secondary battery.

Subsequently, the crushed product of the lithium-ion secondary battery was sieved with a sieve (diameter: 200 mm, manufactured by TOKYO SCREEN CO., LTD.) having the screen opening size of 1.2 mm to classify the crushed product of the lithium-ion secondary battery, to thereby obtain an oversize product of 1.2 mm (coarse-particle product) and an undersize product (fine-particle product) after sieving. Note that, when an amount of lithium included in the lithium-ion secondary battery was determined as 100%, an amount of the lithium lost in the coarse-particle product was 1%, and 99% of the lithium could be recovered in the fine-particle product.

### <Formation of slurry and solid-liquid separation>

As for the obtained fine-particle product, 50 kg of the fine-particle product was immersed in 250 L of water to leach lithium into the water under conditions where a solid-liquid ratio was 20%, a stirring speed was 400 rpm, and leaching duration was 1 hour, to thereby obtain a fine-particle product slurry.

### <Wet magnetic separation>

Wet magnetic separation was performed on the obtained fine-particle product slurry by a drum-type magnetic separation separator (product name: WD L-8 laboratory model, manufactured by Eriez Magnetics Japan Co., Ltd.) at magnetic force of 1500 G, drum revolution number of 45 rpm, a solid-liquid ratio of 20%, and slurry feeding speed of 100 L/h/min, to obtain a magnetic material (including water) and 250 L of a non-magnetic material slurry. The magnetic material (including water) was subjected to pressure filtration by a filter press using filter cloth (product name: PP934K, manufactured by Nakao Filter Media Corp.) at a pressure of 0.6 MPa, to thereby obtain a magnetic material (dehydrated). The magnetic material (dehydrated) was dried by a dryer (product name: DRM620DD, manufactured by ADVANTEC TOYO KAISHA, LTD.) at 105°C for 24 hours, to thereby obtain a magnetic material.

### <Acid leaching>

Acid leaching was performed on the non-magnetic material slurry (250 L) with sulfuric acid. While diluted sulfuric acid having a concentration of 75% and water were added to the non-magnetic material slurry in a FRP tank having a volume of 1,000 L (prepared product, diameter of 1,084 mm, height of 1,500 mm) to adjust pH of the mixture to 1.5, the mixture was stirred by a stirrer (product name: Super Agitator, model number: TTF-2V, manufactured by TOYOKI KOGYO CO., LTD.) at a stirring speed of 200 rpm for 1 hour to leach lithium. After the acid leaching, the leach slurry was subjected to pressure filtration by a filter press using filter cloth (product name: PP934K, manufactured by Nakao Filter Media Corp.) at a pressure of 0.6 MPa, to thereby obtain an acid leachate including lithium. The concentration of lithium in the acid leachate was 3,400 mg/L, and the concentration of sulfuric acid ions in the acid leachate was 42,000 mg/L. After passing 25 L of water through the acid leach residue (25 kg) in the filter press to wash the acid leach residue, the acid leach residue was recovered as a carbon concentrate. After passing 30 L of water through the acid leach residue (30 kg) in the filter press to wash the acid leach residue, the acid leach residue was recovered as a carbon concentrate.

### <Neutralization>

The obtained acid leachate was provided in a FRP tank (prepared product, diameter of 1,084 mm, and height of 1,500 mm). In the state where the acid leachate was stirred by a stirrer (product name: HP-5006, manufactured by HANWAKAKOKI CO., LTD.), slaked lime slurry having a slurry concentration of 10% and water were added to the acid leachate, and the mixture was neutralized for 1 hour while adjusting pH to 11.0. Thereafter, the resultant mixture was subjected to pressure filtration by a filter press using filter cloth (product name: PP934K, manufactured by Nakao Filter Media Corp.) at a pressure of 0.6 MPa to perform solid-liquid separation, thereby obtaining 500 L of a Li solution (neutralized liquid) from which boron (B), fluorine (F), aluminum (Al), and SO₄ were removed.

### <Calcium carbonate crystallization>

Sodium carbonate was added to the neutralized liquid, where an amount of the added sodium carbonate was 2.0 in a molar ratio to the calcium ions (370 mg/L) in the neutralized liquid, and was 0.06 in a molar ratio to the lithium ions (2,000 mg/L) in the neutralized liquid. The resultant mixture was stirred by a stirrer (product name: Super Agitator, model number: TTF-2V, manufactured by TOYOKI KOGYO CO., LTD.) at a stirring speed of 200 rpm for 1 hour, followed by performing pressure filtration by a filter press using filter cloth (product name: PP934K, manufactured by Nakao Filter Media Corp.) at a pressure of 0.6 MPa to perform solid-liquid separation, thereby obtaining a Li solution (liquid after calcium carbonate crystallization and removal) from which calcium carbonate was removed.

### <Concentration>

The liquid after the calcium carbonate crystallization and removal (500 L) was concentrated fivefold by an electrodialysis device (product name: AC-10, manufactured by ASTOM Corporation) (obtaining 100 L of a liquid after concentration).

### <Calcium adsorption and removal>

The liquid after the concentration (Ca concentration of 8 mg/L, 100 L) was provided in a FRP tank (prepared product, inner diameter of 1,084 mm, height of 1,500 mm), and the liquid after the concentration was passed through a chelating resin column (product name: SUMICHELATE MC770, manufactured by Sumika Chemtex Company, Limited) at a space velocity (SV) of 5, thereby obtaining a liquid after calcium adsorption and removal (Ca concentration of less than 0.1 mg/L (limit of quantitation), 100 L) .

### <Crude lithium carbonate crystallization>

To the liquid after concentration that was heated at 90°C, an amount of lithium carbonate serving as a seed crystal, which was 10% by mass relative to an intended yield of crystallization, and 190 g/L of sodium carbonate were added, followed by stirring the resultant mixture for 1 hour. Thereafter, the resultant mixture was subjected to solid-liquid separation by a filter press to thereby obtain a crude lithium carbonate crystallized product and a liquid after crystallization.

### <Evaluations of grade and recovery rate>

Masses of the fine-particle product, the magnetic material, the carbon concentrate (acid leach residue), and the lithium carbonate were measured by an electromagnetic balance (product name: GX-8K, manufactured by A&D Company, Limited), after drying at 105°C for 1 hour. Thereafter, each of the dried samples was dissolved in aqua regia (manufactured by FUJIFILM Wako Pure Chemical Corporation) while heating, and the resultant sample was analyzed by a high frequency inductively coupled plasma optical emission spectrometer (product name: iCaP6300, manufactured by Thermo Fisher Scientific Inc.) to determine a proportion of various impurities other than fluorine in each of the fine-particle product, the magnetic material, the carbon concentrate, and the lithium carbonate.

A fluorine content was analyzed by ion chromatography according to JIS K0202:2008.

For the evaluation of the non-magnetic material slurry, the non-magnetic material slurry was subjected to suction filtration using 5C filter paper to perform solid-liquid separation, to thereby separate the non-magnetic material slurry into the non-magnetic material (solid) and the liquid. A grade of the non-magnetic material was determined in the same manner as the analysis method for the fine-particle product, the magnetic material, the carbon concentrate, and the lithium carbonate. The contents other than fluorine of the liquid were determined by directly measuring the liquid by a high frequency inductively coupled plasma optical emission spectrometer (product name: iCaP6300, manufactured by Thermo Fisher Scientific Inc.) and the fluorine content thereof was measured by ion chromatography so that the proportions (concentrations) of various impurities were determined.

An amount of the lithium in the non-magnetic material slurry was determined by: the lithium content (mg/kg) of the non-magnetic material × the mass (kg) of the non-magnetic material + the concentration (mg/L) of lithium in the liquid × the volume (L) of the liquid. When the amount of the lithium in the non-magnetic material slurry was determined as 100%, a mass percentage (%) of an amount of lithium recovered in the acid leachate (the concentration of lithium in the acid leachate × the amount of the acid leachate) and a mass percentage (%) of an amount of lithium recovered in the lithium carbonate (the lithium content in the lithium carbonate × the mass of the recovered lithium carbonate) were each determined as a lithium recovery rate.

### <Results of Example 1>

In Example 1, the lithium carbonate had a boron content of less than 1 ppm, a calcium content of 44 ppm, a phosphorous content of less than 10 ppm, a fluorine content of less than 100 ppm, a potassium content of 57 ppm, a sodium content of 3.5% by mass, and SO₄ content of 2.0% by mass. Relative to Li (100%) in the non-magnetic material slurry, a recovery rate of Li in the acid leachate was 98%, and a recovery rate of Li in the crude lithium carbonate was 77%.

### (Example 2)

### <Washing of lithium carbonate with warm water>

The above steps were performed in the same manner as in Example 1, except that, in the crude lithium carbonate crystallization, 2 parts of water at 90°C was passed through 1 part of the crude lithium carbonate crystallized product in the filter press to wash the crude lithium carbonate crystallized product to obtain purified lithium carbonate. A grade of the lithium carbonate and recovery rates were evaluated in the same manner as in Example 1.

### <Results of Example 2>

In Example 2, the lithium carbonate had a boron content of less than 1 ppm, a calcium content of 49 ppm, a fluorine content of less than 100 ppm, a phosphorous content of less than 10 ppm, a potassium content of less than 10 ppm, a sodium content of 0.01% by mass, and a SO₄ content of 0.01% by mass. Relative to Li (100%) in the non-magnetic material slurry, a recovery rate of Li in the acid leachate was 98%, and a recovery rate of Li in the crude lithium carbonate was 69%.

### (Example 3)

### <Heat treatment>

As depicted in the process flow of Fig. 1, a heat treatment step, a crushing step, a classification step, a magnetic separation step, and a wet separation step were performed on 300 kg of a lithium-ion secondary battery pack for a vehicle whose outer case (housing) was formed of aluminum (including iron in some of parts) (the lithium-ion secondary battery included a positive electrode collector that was an aluminum foil, a negative electrode collector that was a copper foil, a negative electrode active material that was a carbon material, and an electrolytic solution that included fluorine), to thereby recover valuable materials. The details are as follows.

The heat treatment was performed on the lithium-ion secondary battery pack at the heat treatment temperature of 800°C (heating from 20°C to 800°C over the period of 15 minutes, and retained at 800°C for 2 hours) in the ambient atmospheric by a fixed bed furnace whose inner shape was a cylinder (4,300 mm in diameter × 6,500 mm in height) serving as a heat treatment apparatus. For the heat treatment, the lithium-ion secondary battery pack for vehicles was placed on a receiving tray for recovering aluminum derived from the housing, and the aluminum derived from the housing was melted and collected as a melt on the receiving tray.

### <Crushing and classification>

Subsequently, at the crushing step, the lithium-ion secondary battery to which the heat treatment was performed was crushed by a hammer crusher (Makino-type swing hammer crusher HC-20-3.7, manufactured by MAKINO MFG. CO., LTD.) serving as a crushing apparatus at 50 Hz (circumferential speed of hammer: 38 m/s) with a punched metal having an opening diameter of 10 mm disposed at the outlet part, to thereby obtain a crushed product of the lithium-ion secondary battery.

Subsequently, the crushed product of the lithium-ion secondary battery was sieved with a sieve (diameter: 200 mm, manufactured by TOKYO SCREEN CO., LTD.) having the screen opening size of 1.2 mm to classify the crushed product of the lithium-ion secondary battery, to thereby obtain an oversize product of 1.2 mm (coarse-particle product) and an undersize product (fine-particle product) after sieving. Note that, when an amount of lithium included in the lithium-ion secondary battery was determined as 100%, an amount of the lithium lost in the coarse-particle product was 1%, and 99% of the lithium could be recovered in the fine-particle product.

### <Formation of slurry and solid-liquid separation>

As for the obtained fine-particle product, 50 kg of the fine-particle product was immersed in 250 L of water to leach lithium into the water under conditions where a solid-liquid ratio was 20%, a stirring speed was 400 rpm, and leaching duration was 1 hour, to thereby obtain a fine-particle product slurry.

### <Wet magnetic separation>

Wet magnetic separation was performed on the obtained fine-particle product slurry by a drum-type magnetic separation separator (product name: WD L-8 laboratory model, manufactured by Eriez Magnetics Japan Co., Ltd.) at magnetic force of 1500 G, drum revolution number of 45 rpm, a solid-liquid ratio of 20%, and slurry feeding speed of 100 L/h/min, to obtain a magnetic material (including water) and 250 L of a non-magnetic material slurry. The magnetic material (including water) was subjected to pressure filtration by a filter press using filter cloth (product name: PP934K, manufactured by Nakao Filter Media Corp.) at a pressure of 0.6 MPa, to thereby obtain a magnetic material (dehydrated). The magnetic material (dehydrated) was dried by a dryer (product name: DRM620DD, manufactured by ADVANTEC TOYO KAISHA, LTD.) at 105°C for 24 hours, to thereby obtain a magnetic material.

### <Acid leaching>

Acid leaching was performed on the non-magnetic material slurry (250 L) with sulfuric acid. While diluted sulfuric acid having a concentration of 75% and water were added to the non-magnetic material slurry in a FRP tank having a volume of 1,000 L (prepared product, diameter of 1,084 mm, height of 1,500 mm) to adjust pH of the mixture to 1.5, the mixture was stirred by a stirrer (product name: Super Agitator, model number: TTF-2V, manufactured by TOYOKI KOGYO CO., LTD.) at a stirring speed of 200 rpm for 1 hour to leach lithium. After the acid leaching, the leach slurry was subjected to pressure filtration by a filter press using filter cloth (product name: PP934K, manufactured by Nakao Filter Media Corp.) at a pressure of 0.6 MPa, to thereby obtain recover an acid leachate including lithium. The concentration of lithium in the acid leachate was 3,400 mg/L, and the concentration of sulfuric acid ions in the acid leachate was 42,000 mg/L. After passing 25 L of water through the acid leach residue (25 kg) in the filter press to wash the acid leach residue, the acid leach residue was recovered as a carbon concentrate. After passing 30 L of water through the acid leach residue (30 kg) in the filter press to wash the acid leach residue, the acid leach residue was recovered as a carbon concentrate.

### <Neutralization>

The obtained acid leachate was provided in a FRP tank (prepared product, diameter of 1,084 mm, and height of 1,500 mm). In the state where the acid leachate was stirred by a stirrer (product name: HP-5006, manufactured by HANWAKAKOKI CO., LTD.), slaked lime slurry having a slurry concentration of 10% and water were added to the acid leachate, and the mixture was neutralized for 1 hour while adjusting pH to 11.0. Thereafter, the resultant mixture was subjected to pressure filtration by a filter press using filter cloth (product name: PP934K, manufactured by Nakao Filter Media Corp.) at a pressure of 0.6 MPa to perform solid-liquid separation, thereby obtaining 500 L of a Li solution (neutralized liquid) from which boron (B), fluorine (F), aluminum (Al), and SO₄ were removed.

### <Calcium carbonate crystallization>

Sodium carbonate was added to the neutralized liquid, where an amount of the added sodium carbonate was 2.0 in a molar ratio to the calcium ions (370 mg/L) in the neutralized liquid, and was 0.06 in a molar ratio to the lithium ions (2,000 mg/L) in the neutralized liquid. The resultant mixture was stirred by a stirrer (product name: Super Agitator, model number: TTF-2V, manufactured by TOYOKI KOGYO CO., LTD.) at a stirring speed of 200 rpm for 1 hour, followed by performing pressure filtration by a filter press using filter cloth (product name: PP934K, manufactured by Nakao Filter Media Corp.) at a pressure of 0.6 MPa to perform solid-liquid separation, thereby obtaining a Li solution (liquid after calcium carbonate crystallization and removal) from which calcium carbonate was removed.

### <Calcium adsorption and removal>

The liquid after the calcium carbonate crystallization and removal (Ca concentration of 4 mg/L, 500 L) was provided in a FRP tank (prepared product, inner diameter of 1,084 mm, height of 1,500 mm), and the liquid after the calcium carbonate crystallization and removal was passed through a chelating resin column (product name: SUMICHELATE MC770, manufactured by Sumika Chemtex Company, Limited) at a space velocity (SV) of 5, to thereby obtain a liquid after calcium adsorption and removal (Ca concentration of less than 0.1 mg/L (limit of quantitation), 500 L) .

### <Concentration>

The liquid after the calcium adsorption and removal (475 L) was concentrated fivefold by an electrodialysis device (product name: AC-10, manufactured by ASTOM Corporation) (obtaining 95 L of a liquid after concentration).

### <Crude lithium carbonate crystallization>

To the liquid after concentration that was heated at 90°C, an amount of lithium carbonate serving as a seed crystal, which was 10% by mass relative to an intended yield of crystallization, and 190 g/L of sodium carbonate were added, followed by stirring the resultant mixture for 1 hour. Thereafter, the resultant mixture was subjected to solid-liquid separation by a filter press to thereby obtain a crude lithium carbonate crystallized product and a liquid after crystallization.

### <Evaluations of grade and recovery rate>

Masses of the fine-particle product, the magnetic material, the carbon concentrate (acid leach residue), and the lithium carbonate were measured by an electromagnetic balance (product name: GX-8K, manufactured by A&D Company, Limited), after drying at 105°C for 1 hour. Thereafter, each of the dried samples was dissolved in aqua regia (manufactured by FUJIFILM Wako Pure Chemical Corporation) while heating, and the resultant sample was analyzed by a high frequency inductively coupled plasma optical emission spectrometer (product name: iCaP6300, manufactured by Thermo Fisher Scientific Inc.) to determine a proportion of various impurities other than fluorine in each of the fine-particle product, the magnetic material, the carbon concentrate, and the lithium carbonate.

A fluorine content was analyzed by ion chromatography according to JIS K0202:2008.

For the evaluation of the non-magnetic material slurry, the non-magnetic material slurry was subjected to suction filtration using 5C filter paper to perform solid-liquid separation, thereby separating the non-magnetic material slurry into the non-magnetic material (solid) and the liquid. A grade of the non-magnetic material was determined in the same manner as the analysis method for the fine-particle product, the magnetic material, the carbon concentrate, and the lithium carbonate. The contents other than fluorine of the liquid were determined by directly measuring the liquid by a high frequency inductively coupled plasma optical emission spectrometer (product name: iCaP6300, manufactured by Thermo Fisher Scientific Inc.) and the fluorine content thereof was measured by ion chromatography so that the proportions (concentrations) of various impurities were determined.

An amount of the lithium in the non-magnetic material slurry was determined by: the lithium content (mg/kg) of the non-magnetic material × the mass (kg) of the non-magnetic material + the concentration (mg/L) of lithium in the liquid × the volume (L) of the liquid. When the amount of the lithium in the non-magnetic material slurry was determined as 100%, a mass percentage (%) of an amount of lithium recovered in the acid leachate (the concentration of lithium in the acid leachate × the amount of the acid leachate) and a mass percentage (%) of an amount of lithium recovered in the lithium carbonate (the lithium content in the lithium carbonate × the mass of the recovered lithium carbonate) were each determined as a lithium recovery rate.

### <Results of Example 3>

In Example 3, the lithium carbonate had a boron content of less than 1 ppm, a calcium content of 97 ppm, a phosphorous content of less than 10 ppm, a fluorine content of less than 100 ppm, a potassium content of 53 ppm, a sodium content of 3.5% by mass, and a SO₄ content of 2.0% by mass. Relative to Li (100%) in the non-magnetic material slurry, a recovery rate of Li in the acid leachate was 98%, and a recovery rate of Li in the crude lithium carbonate was 77%.

### (Example 4)

### <Washing of ion-exchange membrane of electrodialysis device>

The above steps were performed in the same manner as in Example 3, except that, after the calcium adsorption and removal step and before the concentration step, 10 L of the liquid after the calcium adsorption and removal and 15 L of the liquid after the calcium adsorption and removal were added to a concentrate tank and a dilute solution tank of an electrodialysis device (product name: AC-10, manufactured by ASTOM Corporation), respectively, electrodialysis was performed for 30 minutes, and calcium ions in an ion-exchange membrane of the electrodialysis device were exchanged with lithium in the liquid after calcium adsorption to wash the ion-exchange membrane. A grade of the lithium carbonate and recovery rates were evaluated in the same manner as in Example 1.

### <Results of Example 4>

In Example 4, the lithium carbonate had a boron content of less than 1 ppm, a calcium content of 51 ppm, a phosphorous content of less than 10 ppm, a fluorine content of less than 100 ppm, a potassium content of 52 ppm, a sodium content of 3.5% by mass, and a SO₄ content of 2.0% by mass. Relative to Li (100%) in the non-magnetic material slurry, a recovery rate of Li in the acid leachate was 98%, and a recovery rate of Li in the crude lithium carbonate was 74%.

### (Example 5)

### <Washing of lithium carbonate with warm water>

The above steps were performed in the same manner as in Example 4, except that, at the crude lithium carbonate crystallization, 2 parts of water at 90°C was passed through 1 part of the crude lithium carbonate crystallized product in the filter press to wash the crude lithium carbonate crystallized product to obtain purified lithium carbonate. A grade of the lithium carbonate and recovery rates were evaluated in the same manner as in Example 1.

### <Results of Example 5>

In Example 5, the lithium carbonate had a boron content of less than 1 ppm, a calcium content of 53 ppm, a fluorine content of less than 100 ppm, a phosphorous content of less than 10 ppm, a potassium content of less than 10 ppm, a sodium content of 0.01% by mass, and a SO₄ content of 0.01% by mass. Relative to Li (100%) in the non-magnetic material slurry, a recovery rate of Li in the acid leachate was 98%, and a recovery rate of Li in the crude lithium carbonate was 65%.

### (Comparative Example 1)

The above steps were performed in the same manner as in Example 1, except that hydrochloric acid was used for the acid leaching, and a grade of lithium carbonate and recovery rates were evaluated in the same manner as in Example 1.

### <Results of Comparative Example 1>

In Comparative Example 1, the lithium carbonate had a boron content of 4 ppm, a calcium content of 60 ppm, a fluorine content of less than 100 ppm, a potassium content of 67 ppm, a sodium content of 3.5% by mass, and a SO₄ content of 0.01% by mass. Relative to Li (100%) in the non-magnetic material slurry, a recovery rate of Li in the acid leachate was 98%, and a recovery rate of Li in the crude lithium carbonate was 85%.

### (Comparative Example 2)

The above steps were performed in the same manner as in Example 1, except that pH was set at 4 for the acid leaching, and a grade of lithium carbonate and recovery rates were evaluated in the same manner as in Example 1.

### <Results of Comparative Example 2>

In Comparative Example 2, the lithium carbonate had a boron content of 3 ppm, a calcium content of 58 ppm, and a potassium content of 62 ppm. Relative to Li (100%) in the non-magnetic material slurry, a recovery rate of Li in the acid leachate was 29%, and a recovery rate of Li in the crude lithium carbonate was 11%.

### (Comparative Example 3)

The above steps were performed in the same manner as in Example 1, except that sodium hydroxide was used to perform the neutralization step, and a grade of lithium carbonate and recovery rates were evaluated in the same manner as in Example 1.

### <Results of Comparative Example 3>

In Comparative Example 3, the lithium carbonate had a boron content of 6 ppm, a calcium content of 57 ppm, a potassium content of 64 ppm, and a fluorine content of 8,200 ppm. Relative to Li (100%) in the non-magnetic material slurry, a recovery rate of Li in the acid leachate was 98%, and a recovery rate of Li in the crude lithium carbonate was 86%.

### (Comparative Example 4)

The above steps were performed in the same manner as in Example 1, except that a cation-exchange resin column (product name: DUOLITE C20SC, manufactured by Sumika Chemtex Company, Limited) was used instead of the chelating resin, and a grade of lithium carbonate and recovery rates were evaluated in the same manner as in Example 1.

### <Results of Comparative Example 4>

In Comparative Example 4, the lithium carbonate had a boron content of less than 1 ppm, a calcium content of 660 ppm, a fluorine content of less than 100 ppm, and a potassium content of 59 ppm. Relative to Li (100%) in the non-magnetic material slurry, a recovery rate of Li in the acid leachate was 98%, and a recovery rate of Li in the crude lithium carbonate was 45%.

### (Comparative Example 5)

The above steps were performed in the same manner as in Example 1, except that the calcium carbonate crystallization step was not performed, and a grade of lithium carbonate and recovery rates were evaluated in the same manner as in Example 1.

### <Results of Comparative Example 5>

In Comparative Example 5, the lithium carbonate had a boron content of less than 1 ppm, a calcium content of 162 ppm, a fluorine content of less than 100 ppm, and a potassium content of 55 ppm. Relative to Li (100%) in the non-magnetic material slurry, a recovery rate of Li in the acid leachate was 98%, and a recovery rate of Li in the crude lithium carbonate was 77%.

This international application is based upon and claims priority to Japanese Patent Application No. 2022-007276, filed on January 20, 2022, and Japanese Patent Application No. 2022-204158, filed on December 21, 2022, the entire contents of which are incorporated herein by reference.

## Claims

1. A method of recovering valuable materials, the method comprising:
a heat treatment step of performing a heat treatment on a lithium-ion secondary battery at a temperature of 660°C or higher to obtain a heat-treated product;
a crushing and classification step of crushing the heat-treated product to obtain a crushed product and classifying the crushed product into a coarse-particle product and a fine-particle product, both including the valuable materials;
a slurry formation step of immersing the fine-particle product in water to form fine-particle product slurry;
a wet magnetic separation step of performing wet magnetic separation on the fine-particle product slurry to separate the fine-particle product slurry into a magnetic material and a non-magnetic material slurry;
an acid leaching step of adding sulfuric acid to the non-magnetic material slurry, or a non-magnetic material obtained by performing solid-liquid separation on the non-magnetic material slurry, or both the non-magnetic material slurry and the non-magnetic material to adjust pH to 0 or greater and 3.5 or less to leach the non-magnetic material, followed by performing solid-liquid separation to obtain an acid leachate and an acid leach residue;
a neutralization step of neutralizing the acid leachate with calcium hydroxide;
a neutralized cake solid-liquid separation step of performing solid-liquid separation on a liquid obtained at the neutralization step;
a calcium carbonate crystallization step of adding CO₂ to a liquid obtained at the neutralized cake solid-liquid separation step;
a calcium carbonate solid-liquid separation step of performing solid-liquid separation on a liquid obtained at the calcium carbonate crystallization step; and
a calcium adsorption and removal step of adsorbing and removing calcium with a chelating resin after the calcium carbonate solid-liquid separation step,
wherein the method of recovering valuable materials is a method of recovering lithium carbonate from the lithium-ion secondary battery, where the lithium carbonate has a boron content of less than 1 ppm and a calcium content of 100 ppm or less.

2. The method of recovering valuable materials according to claim 1,
wherein an amount of the CO₂ added at the calcium carbonate crystallization step is 0.1 or greater in a molar ratio to calcium ions of the liquid obtained at the neutralized cake solid-liquid separation step, and is 0.5 or less in a molar ratio to lithium ions of the liquid obtained at the neutralized cake solid-liquid separation step.

3. The method of recovering valuable materials according to claim 1 or 2,
wherein the chelating resin is an iminodiacetic acid group-containing chelating resin.

4. The method of recovering valuable materials according to claim 1, further comprising:
a first concentration step of concentrating, by electrolysis, lithium included in the liquid obtained at calcium carbonate crystallization step, after the calcium carbonate crystallization step.

5. The method of recovering valuable materials according to claim 1, further comprising:
a second concentration step of performing electrodialysis to concentrate lithium included in a liquid from which calcium is removed through adsorption, after the calcium adsorption and removal step.

6. The method of recovering valuable materials according to claim 4 or 5, further comprising:
a lithium carbonate crystallization step of adding carbonic acid to a concentrate obtained at the first concentration step or the second concentration step to crystallize lithium carbonate.

7. The method of recovering valuable materials according to claim 6,
wherein the lithium carbonate is washed with warm water to obtain lithium carbonate having both a sulfuric acid content and a sodium content of 0.5% by mass or less.

8. The method of recovering valuable materials according to claim 1 or 2,
wherein the lithium carbonate has a potassium content of 50 ppm or less.
